# FASCICULE DE BREVET EUROPEEN

(11) **EP 1 392 708 B1**
(45) Date de publication et mention de la délivrance du brevet: **22.03.2006**
(21) Numéro de dépôt: 02743347.3
(22) Date de dépôt: 04.06.2002
(51) Int. Cl.: C07F 15/00, C07F 7/18, C07F 7/14

(54) **PROCEDE DE PREPARATION DE CATALYSEURS METALLIQUES A BASE DE CARBENES, POUR L'HYDROSILYLATION DE COMPOSES INSATURES ET CATALYSEURS DE CE TYPE**
VERFAHREN ZUR HERSTELLUNG VON KATALYSATOREN AUF BASIS METALLISCHER CARBENE ZUR HYDROSILYLIERUNG VON UNGESÄTTIGTEN VERBINDUNGEN UND DIE SO ERHALTENEN KATALYSATOREN
METHOD FOR PREPARING METALLIC CARBENE-BASED CATALYSTS FOR HYDROSILYLATION OF UNSATURATED COMPOUNDS AND RESULTING CATALYSTS

(30) Priorité: 07.06.2001 FR 0107475
(43) Date de publication de la demande: 03.03.2004
(73) Titulaire: RHODIA CHIMIE, 92100 Boulogne Billancourt (FR)
(72) Inventeur: BUISINE, Olivier, F-69007 LYON (FR); MARKO, Istvan, B-1390 GREZ-DOICEAU (BE); STERIN, Sébastien, F-69450 Saint Cyr au Mont D'or (FR)
(74) Mandataire: Trolliet, Maurice
(86) Numéro de dépôt international: PCT/FR2002/001896
(87) Numéro de publication internationale: WO 2002/098888

(56) Documents cités:
- US-A- 2 823 218
- US-A- 2 970 150
- US-A- 3 775 452
- US-A- 5 359 113
- ENDERS, DIETER ET AL: "Diastereoselective synthesis of chiral (triazolinylidene)rhodium complexes containing an axis of chirality" EUR. J. INORG. CHEM., no. 7, 1998, pages 913-919, XP002189972

## Description

L'invention concerne la préparation de catalyseurs de réactions d'hydrosilylation et notamment d'hydrosilylation de composés éthyléniquement et/ou acétyléniquement insaturés (par exemple oléfines ou dérivés acétyléniques), en particulier mais non limitativement celles impliquant des polyorganosiloxanes (POS) porteurs de motifs Si-H et des POS porteurs de motifs Si*-(insaturation éthylénique ou acétylénique*).

Classiquement les catalyseurs d'hydrosilylation sont des catalyseurs au platine (US 2 823 218, US 2 970 150). En pratique, à ce jour, la plupart des réactions industrielles d'hydrosilylation sont catalysées par la solution de Karstedt qui est constituée par des complexes de platine au degré d'oxydation 0. La formule générale idéale du complexe de Karstedt est Pt₂(tétraméthyidivinylsiloxane)₃ : 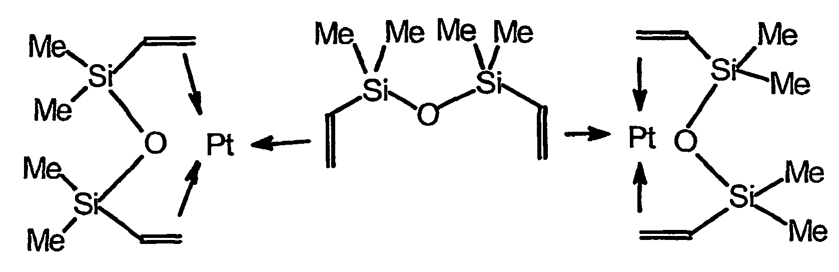 où Me représente méthyle.
Le complexe de Karstedt est préparé par mise en contact de 1,3-divinyltétraméthyldisiloxane avec de l'acide chloroplatinique (H₂PtCl₆), en présence de NaHCO₃ et d'un solvant hydroalcoolique (isopropanol).
Ce catalyseur usuel et son obtention sont décrits dans le brevet US 3 775 452.

La demande de brevet non publiée FR 99 15432 du 07/12/1999 divulgue des complexes métalliques utiles comme catalyseurs d'hydrosilylation, de formule : 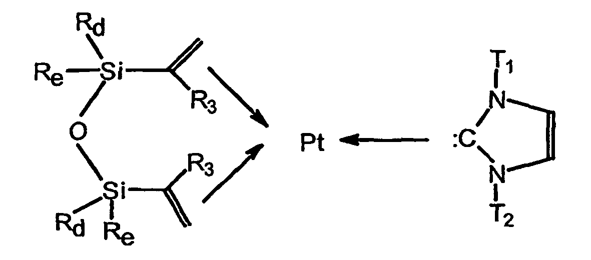 dans laquelle :
R₃ représente un atome d'hydrogène ; un groupe (C₁-C₈)alkyle ; ou un groupe (C₃-C₈)cycloalkyle éventuellement substitué par (C₁-C₄)alkyle ;
T₁ et T₂ sont identiques et représentent (C₁-C₈)alkyle ou (C₃-C₈)cycloalkyle ;
R_{d} et Rₑ sont identiques et représentent (C₁-C₈)alkyle ou (C₃-C₈)cycloalkyle; (de préférence T₁ = T₂ = R_{d} = Rₑ = méthyle).
Ces complexes métalliques Pt/carbène sont obtenus selon une méthodologie en deux étapes illustrée par l'exemple suivant :
1. Préparation du carbène : 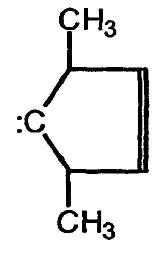
2. Préparation du complexe du platine de formule : 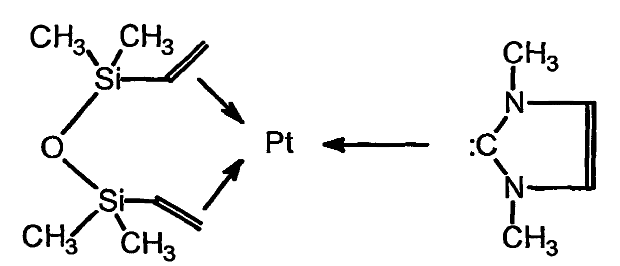
Dans l'étape 1, on met en oeuvre un milieu réactionnel comprenant un précurseur du carbène: par exemple l'iodure de 1,3-diméthylimidazolinium, un système solvant comprenant du THF et de l'ammoniac et une base : NaH. Après déprotonation et évaporation de l'ammoniac, on obtient une solution de carbène dans le THF.
Dans l'étape 2, on mélange cette solution de carbène avec une solution de complexe platinique de Karstedt. Après réaction, diverses étapes de filtration, purification, concentration, lavage, précipitation, un complexe Pt/carbène solide est obtenu.
Cette méthode de préparation gagnerait à être simplifiée et optimisée notamment au regard du rendement et de la productivité, en vue d'une application industrielle.

Le brevet US 5 728 839 divulgue lui aussi la préparation en deux étapes de complexes métalliques / carbène, à partir de sels d'imidazolium, benzimidazolium, triazolium, tétrazolium ou pyrazolium (par exemple iodure). Le carbène est obtenu dans un premier temps par mise en présence du sel d'imidazolium, benzimidazolium, triazolium, tétrazolium ou pyrazolium avec une base déprotonante NaH en solution dans le THF. Dans un deuxième, le complexe métallique (Rhodium) est obtenu par échange entre le carbène et un complexe métal/cyclooléfine (par exemple un di(µ-chloro)-bis-(η⁴-1,5-cyclooctadiène)-dirhodium).

Dans un tel état de la technique, l'un des objectifs essentiels de l'invention est de proposer un procédé perfectionné et performant de préparation de complexes métalliques de formule (I):

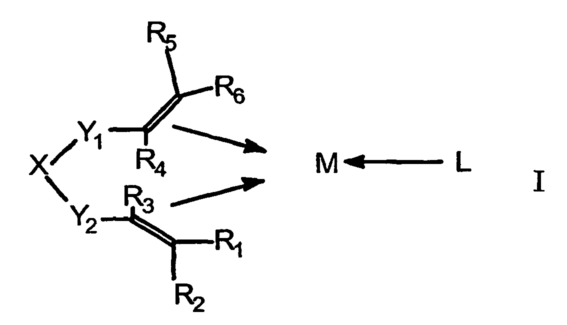

Un autre objectif essentiel de l'invention est proposer un procédé de préparation de complexes métalliques de formule I, perfectionné par rapport à celui décrit dans la demande de brevet antérieure non publiée FR 99 15432 en termes de simplification méthodologique, d'augmentation du rendement et de diminution du coût.

Un autre objectif essentiel de l'invention est proposer un procédé perfectionné de préparation de complexes métalliques de formule I employés à titre de catalyseurs d'hydrosilylation, ces derniers se devant d'être stables dans le milieu réactionnel, de manière:
o à produire une activité catalytique sélective et de haut niveau qualitatif et quantitatif,
o et à limiter la formation :
   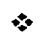 de sous-produits indésirables résultant de réactions d'isomérisation de la double liaison oléfinique et/ou de réactions d'hydrogénation
   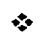 et/ou de sous-produits à l'origine de colorations tout autant peu appréciées.

Un autre objectif essentiel de l'invention est de proposer un procédé d'hydrosilylation et en particulier d'hydrosilylation de composés éthyléniquement et/ou acétyléniquement insaturés, en présence d'un catalyseur comprenant le complexe métallique obtenu par le procédé susvisé.

Ces objectifs, parmi d'autres, sont atteints par la présente invention qui concerne en premier lieu, un procédé de préparation de complexes métalliques de formule (I) : 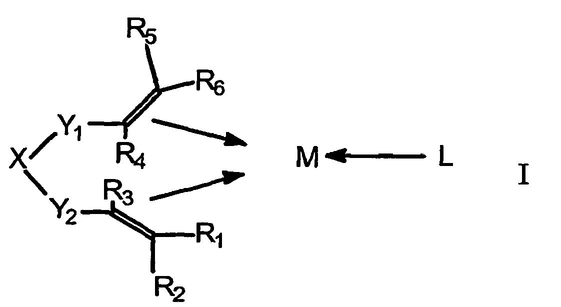 dans laquelle :
M représente un métal choisi parmi les métaux du groupe 8 du tableau périodique tel que publié dans Handbook of Chemistry and Physics, 65^{ème} édition, 1984-1985 ;
X représente O, NRₐ ou CR_{f}R_{g} ;
Y₁ et Y₂ représentent indépendamment l'un de l'autre CR_{b}R_{c} ou SiR_{d}Rₑ ;
R₁, R₂, R₃, R₄, R₅, R₆, Rₐ, R_{b} et R_{c} identiques ou différents, sont choisis parmi un atome d'hydrogène ; un groupe alkyle ; acyle ; aryle éventuellement substitué par alkyle ; cycloalkyle éventuellement substitué par alkyle ; et arylalkyle dans lequel la partie aryle est éventuellement substituée par alkyle ;
R_{d} et Rₑ sont indépendamment choisis parmi alkyle ; aryle éventuellement substitué par alkyle ; cycloalkyle éventuellement substitué par alkyle ; et arytalkyle dans lequel la partie aryle est éventuellement substituée par alkyle ; ou bien
lorsque Y₁ et Y₂ représentent indépendamment SiR_{d}Rₑ, deux groupes R_{d} liés à deux atomes de silicium distincts forment ensemble une chaîne de formule: 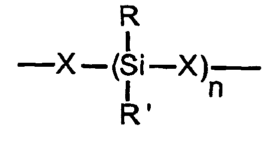
dans laquelle n est un entier de 1 à 3 ; X est tel que défini ci-dessus ; R et R', identiques ou différents, prennent l'une quelconque des significations données ci-dessus pour R₆, étant entendu que, lorsque n est 2 ou 3 un seul atome de silicium de ladite chaîne peut être substitué par un ou deux groupes alcényle ou alcynyle ; ou bien
lorsque Y₁ et Y₂ représentent indépendamment SiR_{d}Rₑ, deux groupes R_{d} liés à des atomes de silicium distincts forment ensemble une chaîne hydrocarbonée saturée, les deux groupes R_{d} ensemble avec lesdits atomes de silicium et X formant un cycle de 6 à 10 chaînons; ou bien
lorsque Y₁ et Y₂ représentent indépendamment CR_{b}R_{c}, deux groupes R_{b} liés à des atomes de carbone distincts forment ensemble une chaîne hydrocarbonée saturée, les deux groupes R_{b} ensemble avec les atomes de carbone qui les portent et X forment un cycle de 6 à 10 chaînons ; et
R_{f} et R_{g} représentent indépendamment l'un de l'autre un atome d'hydrogène ; un groupe alkyle ; acyle ; aryle éventuellement substitué par alkyle ; cycloalkyle éventuellement substitué par alkyle ; arylalkyle dans lequel la partie aryle est éventuellement substituée par alkyle ; un atome d'halogène ; un groupe alcényle ; un groupe alcynyle ; ou un groupe SiG₁G₂G₃ ou G₁, G₂ et G₃ sont indépendamment l'un de l'autre alkyle ; alkoxy ; aryle éventuellement substitué par alkyle ou alkoxy ; ou arylalkyle dans lequel la partie aryle est éventuellement substituée par alkyle ou alkoxy ;
L représente un carbène de formule (ll) : 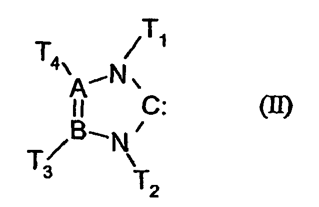
dans laquelle :
   - A et B représentent indépendamment C ou N, étant entendu que lorsque A représente N, alors T₄ ne représente rien et lorsque B représente N, alors T₃ ne représente rien ;
   - T₃ et T₄ représentent indépendamment un atome d'hydrogène ; un groupe alkyle ; cycloalkyle éventuellement substitué par alkyle ou alkoxy ; aryle éventuellement substitué par alkyle ou alkoxy; alcényle ; alcynyle ; ou arylalkyle
   dans lequel la partie aryle est éventuellement substituée par alkyle ou alkoxy ; ou bien
   - T₃ et T₄ peuvent former ensemble et avec A et B quand ceux-ci représentent chacun un atome de carbone, un aryle ;
   - T₁ et T₂ représentent indépendamment un groupe alkyle ; un groupe alkyle éventuellement substitué par alkyle ; un groupe alkyle perfluoré ou éventuellement substitué par un groupe perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
   - T₁ et T₂ représentent indépendamment un radical monovalent de formule (V) suivante :

      ―V₁―V₂ (V)
dans laquelle :
   - V₁ est un radical divalent hydrocarboné, de préférence un alkylène linéaire ou ramifié en C₁-C₁₀, éventuellement substitué,
   - V₂ est un radical monovalent choisi dans le groupe des substituants suivants :
      ◆ alcoxy, -OR^{v} avec R^{v} correspondant à hydrogène, alkyle, aryle
      ◆ amine, de préférence N(R^{v})₂ avec R^{v} correspondant à hydrogène, alkyle, aryle, ou bien encore,

- T₁ et T₂ représentent indépendamment un radical monovalent de formule (W) suivante :

   ―W₁―ω―W₂ (W)

   dans laquelle :
   - W₁ est un radical divalent hydrocarboné, de préférence un alkylène linéaire ou ramifié en C₁-C₁₀, éventuellement substitué,
   - ω représente :

      ―R^{α}C=CR^{α}―

      avec R^{α} correspondant à H ou alkyle
   ou

   ―C≡C―
   - W₂ est un radical monovalent choisi dans le groupe des substituants suivants :
      ◆ R^{β} = alkyle, H ;
      ◆ Si-alkyle, Si-alcényle ou Si-alcynyle, de préférence Si-(alkyle)₃ ;
      ◆ alcool, de préférence ―C(R^{ε})₂OH avec R^{ε} = H ou alkyle ;
      ◆ cétone, de préférence 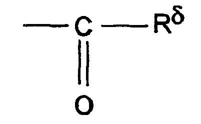 avec R^{δ} = alkyle ; alcényle, alcynyle ;
      ◆ carboxy, de préférence 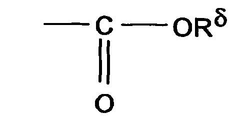 avec R^{δ} = alkyle ; alcényle, alcynyle ;
      ◆ amide, de préférence 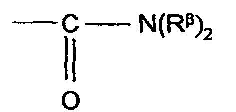 avec R^{β} = H, alkyle ; alcényle, alcynyle ;
      ◆ acyle, de préférence 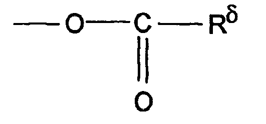 avec R^{δ} = alkyle ; alcényle, alcynyle ;
   ou bien encore
- les substituants T₁, T₂, T₃ et T₄ peuvent former deux à deux, lorsqu'ils sont situés sur deux sommets adjacents dans la formule II, une chaîne hydrocarbonée saturée ou insaturée.
Ce procédé consiste essentiellement à mettre en présence :
- au moins un sel de formule (III) : 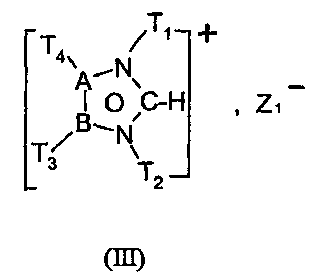 dans laquelle :
   - A, B, T₁, T₂, T₃, T₄ sont tels que définis ci-dessus;
   - Z₁ représente indépendamment un anion dérivé d'un acide de Brônsted (acide protique) de préférence choisi dans le groupe comprenant :
      - les acides carboxyliques de formule Go-COOH dans laquelle Go représente un alkyle, et avantageusement un alkyle en C₁-C₂₂ ; un aryle, avantageusement un aryle en C₆-C₁₈ éventuellement substitué par un ou plusieurs alkyle en C₁-C₆ ;
      - les acides sulfoniques de formule Go-SO₃H dans laquelle Go est tel que défini ci-dessus ;
      - les acides phosphoriques de formule Go-PO₃H dans laquelle Go est tel que défini ci-dessus ;
      - les acides minéraux suivants : HF, HCl, HBr, Hl, H₂SO₄, H₃PO₄, HClO₄ et HBF₄ pris à eux seuls ou en combinaison entre eux ;
      - et leurs mélanges ;
- au moins un complexe précurseur (IV) sélectionné dans le groupe des complexes appropriés comportant les complexes de formule :

   Pt₂[ViMe₂Si-O-SiMe₂Vi]₃ (complexe de Karstedt)

   dans laquelle Vi représente le radical vinyle ;
   et plus généralement les complexes de formule :

   M₂[R₅R₆C=CR₄-Y₁-X-Y₂-CR₃=CR₁R₂]₃

   où M, R₅, R₆, R₄, R₃, R₁, R₂, Y₁, X et Y₂ sont tels que définis ci-dessus, tels que par exemple : M₂[CR₅R₆=CR₄-SiR_{d}Rₑ-O-SiR_{d}Rₑ-CR₃=CR₁R₂]₃ étant entendu que M, R₁, R₂, R₃, R₄, R₅, R₆, R_{d} et Rₑ sont tels que définis ci-dessus ;
- au moins un solvant (V)
- et au moins une base (VI).

L'une des caractéristiques essentielles du procédé selon l'invention est donc de prévoir la formation du complexe métallique/carbène en une seule étape.

On simplifie ainsi grandement le mode opératoire. Cet avantage est d'autant plus intéressant qu'il s'accompagne d'une amélioration du rendement, d'une diminution du coût de revient, et ce sans porter atteinte aux propriétés applicatives des complexes métalliques obtenus. En effet, ce sont des catalyseurs d'hydrosilylation sélectifs, efficaces, stables, entraînant peu de réactions secondaires d'isomérisation et de colorations.

Les complexes métalliques concernés par le procédé selon l'invention sont définis ci-après.

Les métaux du groupe 8 que représente M sont par exemple le palladium, le platine ou le nickel au degré d'oxydation 0. En pratique, M représente le platine à l'état d'oxydation 0.

Par alkyle, on désigne une chaîne hydrocarbonée saturée, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 7 atomes de carbone.

Des exemples de groupes alkyle sont notamment méthyle, éthyle, isopropyle, n-propyle, tert-butyle, isobutyle, n-butyle, n-pentyle, isoamyle et 1,1-diméthylpropyle.

La partie alkyle du radical alcoxy est telle que définie ci-dessus.

Le radical alkyle perfluoré ou éventuellement substitué par un groupe perfluoroalkyle a de préférence pour formule :

―(CH₂)ₚ―CₚF_{2q+1}

dans laquelle p représente 0, 1, 2, 3 ou 4 ; q est un entier de 1 à 10 ; et C_{q}F_{2q+1} est linéaire ou ramifié. Des exemples préférés de ce radical sont : ―(CH₂)₂―CF₂)₅―CF₃ et ―(CF₂)₇―CF₃.

L'expression aryle désigne un groupe hydrocarboné aromatique, ayant de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés (orthocondensés ou ortho et péricondensés) les uns aux autres, c'est-à-dire présentant, deux à deux, au moins deux carbones en commun.
Ledit groupe hydrocarboné aromatique ("aryle") est éventuellement substitué par exemple par un ou plusieurs alkyles en C₁-C₃, un ou plusieurs radicaux hydrocarbonés halogénés (e.g. CF₃), un ou plusieurs alcoxy (e.g. CH₃O) ou un ou plusieurs radicaux hydrocarbonés comprenant un ou plusieurs motifs cétone (e.g. CH₃CO-).
A titre d'exemple d'aryle, on peut mentionner les radicaux phényle, naphtyle, anthryle et phénanthryle.

L'expression arylalkyle désigne un groupe alkyle tel que défini ci-dessus, substitué par un ou plusieurs groupes aryle sur sa chaîne hydrocarbonée, le groupe aryle étant tel que défini ci-dessus. Des exemples en sont benzyle et triphénylméthyle.

Par acyle, on entend un groupe Rₒ-CO- où Rₒ représente alkyle tel que défini ci-dessus ; ou bien un groupe Ar-CO- où Ar représente un groupe aryle tel que défini ci-dessus, ou bien arylalkyle dans lequel aryle et alkyle sont tels que définis ci-dessus et dans lequel la partie aryle est éventuellement substituée e.g. par alkyle.

Par cycloalkyle, on entend un radical hydrocarboné saturé mono- ou polycyclique, de préférence mono- ou bicyclique, présentant préférablement de 3 à 10 atomes de carbone, mieux encore de 3 à 8. Par radical hydrocarboné saturé polycyclique, on entend un radical présentant deux ou plusieurs noyaux cycliques rattachés les uns aux autres par des liaisons σ ou/et condensés deux à deux.

Des exemples de groupes cycloalkyle polycycliques sont adamantane et norbomane.

Des exemples de groupes cycloalkyle monocycliques sont cyclopropyle, cyclobutyle, cyclopentyle, cyclohexyle, cycloheptyle et cyclooctyle.

Par alcényle, on entend une chaîne hydrocarbonée insaturée, linéaire ou ramifiée, substituée ou non, présentant au moins une double liaison oléfinique, et plus préférablement une seule double liaison. De préférence, le groupe alcényle présente de 2 à 8 atomes de carbone, mieux encore de 2 à 6. Cette chaîne hydrocarbonée comprend éventuellement au moins un hétéroatome tel que O,N,S.
Des exemples préférés de groupes alcényle sont les groupes allyle et homoallyle.

Par alcynyle, on entend selon l'invention, une chaîne hydrocarbonée insaturée, linéaire ou ramifiée, substituée ou non, présentant au moins une triple liaison acétylénique, et plus préférablement une seule triple liaison. De préference, le groupe alcynyle présente de 2 à 8 atomes de carbone, mieux encore de 2 à 6 atomes de carbone. A titre d'exemple, on peut citer le groupe acétylényle, ainsi que le groupe propargyle. Cette chaîne hydrocarbonée comprend éventuellement au moins un hétéroatome tel que O,N,S.

L'expression "ne représente rien" signifie que les substituants -T₃, respectivement -T₄, sont inexistants. En effet, dans la formule (II), l'atome d'azote est trivalent, de telle sorte que lorsque A ou B représente N, l'atome d'azote ne peut présenter de substituant supplémentaire.

Les carbènes de formule (II) peuvent présenter au moins deux noyaux condensés, c'est-à-dire que deux substituants au moins parmi T₁, T₂, T₃ et T₄, situés sur deux sommets adjacents, forment ensemble une chaîne hydrocarbonée saturée ou insaturée, présentant de préférence de 3 à 6 atomes de carbone. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique.

Lorsque les carbènes (II) présentent deux noyaux condensés, ils répondent donc à l'une des formules suivantes, dans lesquelles (alk) représente une chaîne hydrocarbonée saturée ou insaturée :

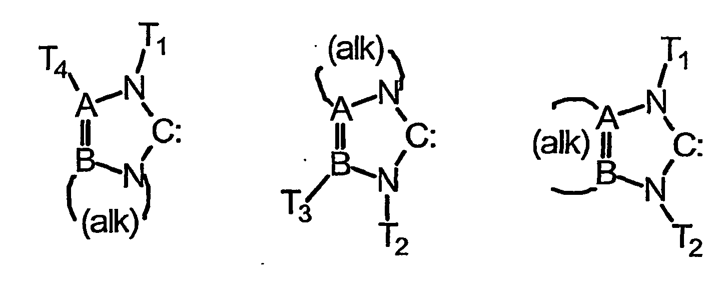

II doit être entendu cependant que les carbènes II peuvent présenter plus de deux noyaux condensés.

Les complexes que l'on prépare de préférence par le procédé selon l'invention, sont ceux dans lesquels Y₁ et Y₂ représentent soit tous les deux CR_{b}R_{c}, soit tous les deux SiR_{d}Rₑ, de telle sorte que lesdits complexes ont, soit pour formule (I.1), soit pour formule (I.2): 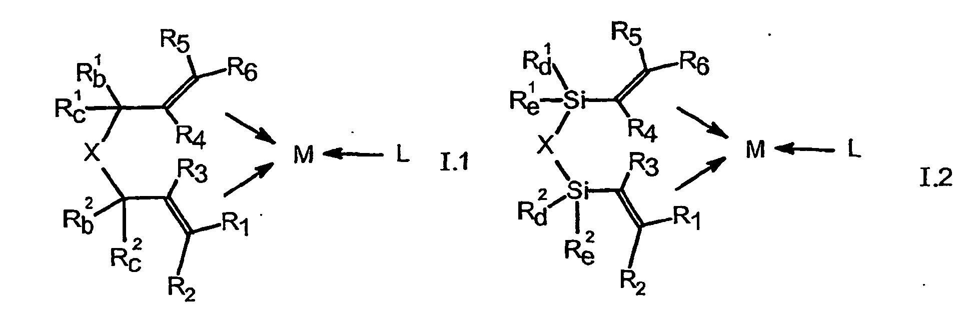 où R_{b} ¹ et R_{c} ¹ sont les substituants R_{b} et R_{c} de Y₁ dans la formule (I.1) ;
R_{b} ² et R_{c} ² sont les substituants R_{b} et R_{c} de Y₂ dans la formule (I.2) ;
R_{d} ¹ et Rₑ ¹ sont les substituants R_{d} et Rₑ de Y₁ dans la formule (I.1) ;
R_{d} ² et Rₑ ² sont les substituants R_{d} et Rₑ de Y₂ dans la formule (I.2).

Ainsi, R_{b} ¹ peut être identique ou différent de R_{b} ² ; R_{c} ¹ peut être identique ou différent de R_{c} ² ; R_{d} ¹ peut être identique ou différent de R_{d} ² ; et Rₑ ¹ peut être identique ou différent de Rₑ ².

En pratique :
R_{b} ¹ = R_{b} ² ; R_{c} ¹ = R_{c} ² ; R_{d} ¹ = R_{d} ² ; et Rₑ ¹ = Rₑ ².
R₃ = R₄ ; R₅ = R₂ ; et R₁ = R₆.

Selon une variante, R_{d} ¹ et R_{d} ² forment ensemble :
(a) soit une chaîne : 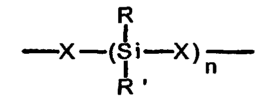 dans laquelle n est un entier de 1 à 3 ; X est tel que défini ci-dessus ; et R et R', identiques ou différents, prennent l'une quelconque des significations données ci-dessus pour Rₑ, étant entendu que, lorsque n est 2 ou 3, un seul atome de silicium de ladite chaîne peut être substitué par un ou deux groupes alcényle ou alcynyle ;
(b) soit une chaîne hydrocarbonée saturée, de telle sorte que les deux substituants R_{d}, ensemble avec les deux atomes de silicium qui les portent et X, forment un cycle de 6 à 10 chaînons, de préférence de 6 à 8 chaînons.

Lorsque R_{d} ¹ et R_{d} ² forment la chaîne (a), on préfère que n vaille 1 ou 2 (mieux encore n vaut 1) et que R = Rₑ, les deux groupes Rₑ portés par les deux atomes de silicium étant identiques. En ce cas, Rₑ représente préférablement alkyle, par exemple méthyle. Mieux encore, dans ces composés, R' représente -CR₃=CR₁R₂ et R₁ = R₆; R₅ = R₂ ; et R₃ = R₄.

Lorsque R_{d} ¹ et R_{d} ² forment la chaîne (b), on préfère que les deux groupes R_{d}, ensemble avec les deux atomes de silicium et le groupe X, forment un cycle à 8 chaînons. En ce cas, on préfère que Rₑ ¹ soit identique à Rₑ ². Ces composés ont pour formule générale : 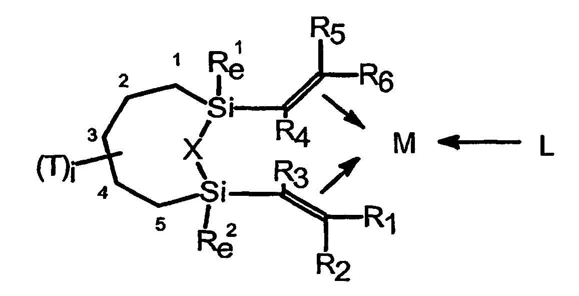 où T représente alkyle , i est un nombre entier compris entre 0 et 5, T étant situé sur un ou plusieurs des sommets 1, 2, 3, 4 et 5 de la formule ci-dessus.

De la même façon, lorsque Y₁ et Y₂ représentent CR_{b}R_{c}, les deux groupes R_{b} liés à des atomes de carbone distincts peuvent former ensemble une chaîne hydrocarbonée saturée (c), de telle sorte que les deux groupes R_{b} ensemble avec les carbones qui les portent et X forment un cycle de 6 à 10 chaînons. De préférence, le cycle formé est un cycle à 8 chaînons, auquel cas le complexe métallique répond à la formule : 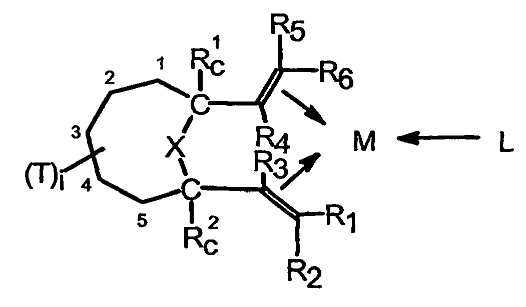 où T représente alkyle ; i est un nombre entier compris entre 0 et 5, T étant situé sur un ou plusieurs des sommets 1, 2, 3, 4 et 5 de la formule ci-dessus.

Deux groupes R_{d} liés à deux atomes de silicium distincts peuvent former une chaîne de formule :

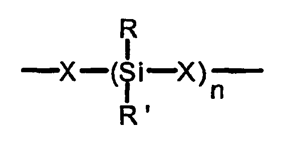

Lorsque c'est le cas, on préfère que X représente O dans les composés de l'invention. Ces composés préférés ont pour formule générale :

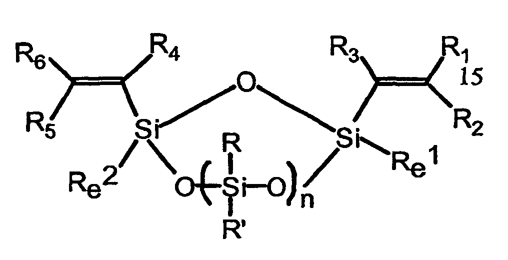

Parmi ces composés, on préfère que Rₑ ¹ = Rₑ ². Avantageusement Rₑ ¹ = Rₑ ² représente alkyle (par exemple méthyle).

De façon préférée, n vaut 1 ou 2 et R = Rₑ ¹, étant entendu que lorsque n vaut 2, un seul atome de silicium de la chaîne O-(SiRR'-O)ₙ- peut être substitué par un ou deux groupes alcényle ou alcynyle. Mieux encore, R' = -CR₃=CR₁R₂ et R₁ = R₆; R₂ = R₅ et R₃ = R₄.

Lorsque R_{f} et/ou Rg représente SiG₁G₂G₃, on préfère que R_{f} et/ou Rg soit trialkylsilyle, par exemple SiG₁G₂G₃ où G₁ = G₂ = G₃ = alkyle.

Des sous-groupes des complexes métalliques de l'invention sont constitués des complexes pour lesquels :
- X = O ; Y₁ et Y₂ représentent indépendamment SiR_{d}Rₑ ; ou
- X = NRₐ ; Y₁ et Y₂ représentent indépendamment CR_{b}R_{c} ; ou
- X = NRₐ ; Y₁ et Y₂ représentent indépendamment SiR_{d}Rₑ ; ou
- X = CR_{f}Rg ; Y₁ et Y₂ représentent indépendamment CR_{b}R_{c} ; ou
- X = CR_{f}R_{g} ; Y₁ et Y₂ représentent indépendamment SiR_{d}Rₑ.

Parmi ces complexes métalliques de formule (I), on préfère ceux pour lesquels :
- lorsque X représente O, Y₁ et Y₂ représentent indépendamment SiR_{d}Rₑ ; ou
- lorsque X représente NRₐ, Y₁ et Y₂ représentent indépendamment CR_{b}R_{c} ; ou
- lorsque X représente CR_{f}Rg, Y₁ et Y₂ représentent indépendamment CR_{b}Rc.

En pratique, X représente O et Y₁ et Y₂ représentent indépendamment SiR_{d}Rₑ dans le complexe métallique de formule (I). Dans le cadre de l'invention, l'expression "représentent indépendamment" signifie que les substituants désignés sont soit identiques soit différents.

Par exemple, R₁, R₂, R₅ et R₆ sont des atomes d'hydrogène.

Des significations préférées de R₃ et R₄ sont notamment un atome d'hydrogène ; un groupe alkyle ; aryle éventuellement substitué par alkyle ; et cycloalkyle éventuellement substitué par alkyle. Parmi ces significations préférées, il est particulièrement avantageux que R₃ et R₄, identiques, représentent un atome d'hydrogène ; (C₃-C₈)cycloalkyle ou (C₁-C₈)alkyle.

Par exemple, le ligand dioléfinique du complexe de formule (I) est symétrique, c'est-à-dire que R₅ = R₂ ; R₆ = R₁ ; R₃ = R₄ et les deux groupes Y₁, Y₂ sont soit strictement identiques entre eux, soit Y₁ = CR_{b} ¹R_{c} et Y₂ = CR_{b} ²R_{c} où R_{b} ¹ et R_{b}² forment ensemble une chaîne symétrique, soit encore Y₁ = SiR_{d} ¹R₈ et Y₂ = SiR_{d} ²Rₑ où R_{d} ¹ et R_{d} ² forment ensemble une chaîne symétrique.

Un groupe préféré de complexes selon l'invention est constitué des complexes de formule (I) dans lesquels L représente un carbène de formule (II). De manière préférée, A et B dans la formule (II) représentent tous deux un atome de carbone.

Concernant les formes préférées de réalisation des ligands dans les formules (I), (1.1), (1.2), ce sont des formes dans lesquelles A = B = atome de carbone dans la formule (II) donnée supra.

Des significations préférées pour T₁ et T₂ dans cette formule Il sont :
- alkyle, en particulier n-propyle, n-pentyle, néo-pentyle (-CH₂-C(CH₃)₃),
- cycloalkyle, en particulier cyclopentyle, cyclohexyle ou adamantyle ;
- alcényle, en particulier allyle (-CH₂-CH=CH₂), méthallyle (-CH₂-C(CH₃)=CH₂);
- alcynyle, en particulier propargyle, homopropargyle (―(CH₂)₂―C≡CH);
- ou radical monovalent (W) défini supra, en particulier 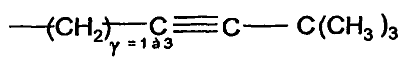 ou

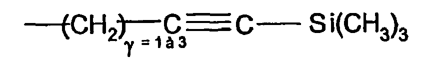

Toujours dans la formule (II) et de préférence, T₃ et T₄ correspondent tous deux à l'hydrogène ou forment ensemble un aryle, et mieux encore un phényle.

Un groupe particulièrement préféré des complexes métalliques de formule (I) est constitué des complexes de formule: 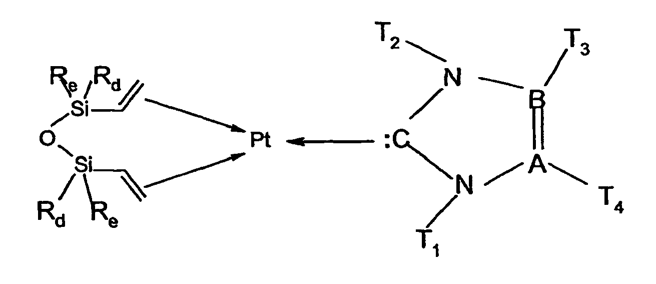 dans laquelle :
T₁ et T₂ sont identiques et sont tels que définis ci-dessus ;
T₃ et T₄ sont tels que définis ci-dessus ;
R_{d} ef Rₑ sont tels que définis ci-dessus.

Selon un autre de ses aspects, la présente invention concerne, à titre de produits nouveaux, des complexes de formule (I) dans lesquels le carbène de formule (II) est tel que :
- T₃ et T₄ peuvent former ensemble et avec A et B quand ceux-ci représentent chacun un atome de carbone, un aryle tel que défini ci-dessus, de préférence un phényle ;
- et/ou T₁ et T₂ représentent indépendamment un radical monovalent de formule (V) suivante :

   ―V₁―V₂ (V)
dans laquelle :
- V₁ est un radical divalent hydrocarboné, de préférence un alkylène linéaire ou ramifié en C₁-C₁₀, éventuellement substitué,
- V₂ est un radical monovalent choisi dans le groupe des substituants suivants :
   ◆ alcoxy, -OR^{ν} avec R^{ν} correspondant à hydrogène, alkyle, aryle
   ◆ amine, de préférence N(R^{ν})₂ avec R^{ν} correspondant à hydrogène, alkyle, aryle

- ou bien T₁ et T₂ représentent indépendamment un radical monovalent de formule (W) suivante :

   ―W₁―ω―W₂ (W)

   dans laquelle :
   - W₁ est un radical divalent hydrocarboné, de préférence un alkylène linéaire ou ramifié en C₁-C₁₀, éventuellement substitué,
   - ω représente :

      ―R^{α}C=CR^{α}―

      avec R^{α} correspondant à H ou alkyle
      ou

      ―C≡C―
   - W₂ est un radical monovalent choisi dans le groupe des substituants suivants :
      ◆ R^{β} = alkyle, H ;
      ◆ Si-alkyle, ou Si-alcényle ou Si-alcynyle, de préférence -Si(alkyle)₃ ;
      ◆ alcool, de préférence ―C(R^{ε})₂OH avec R^{ε} = H ou alkyle ;
      ◆ cétone, de préférence 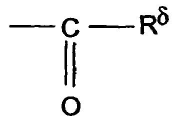 avec R^{δ} = alkyle ; alcényle, alcynyle ;
      ◆ carboxy, de préférence 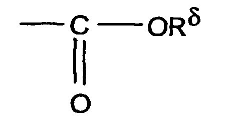 avec R⁶ = alkyle; alcényle, alcynyle ;
      ◆ amide, de préférence 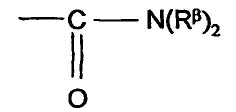 avec R^{β} = H, alkyle ; alcényle, alcynyle ;
      ◆ acyle, de préférence 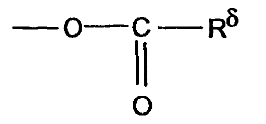 avec R^{δ} = alkyle ; alcényle, alcynyle ;

T₁ et T₂ correspondant de préférence indépendamment à un radical W du type 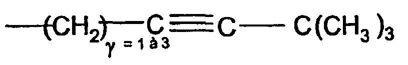 ou 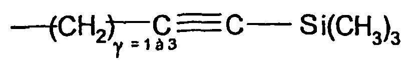 ou bien encore à l'un des motifs suivants méthyle, isopropyle, tert-butyle, n-pentyle, néo-pentyle, cyclopentyle, cyclohexyle, adamantyle, allyle, méthallyle, propargyle ou homopropargyle.

Concernant le sel (III), l'anion Z₁ ⁻ est l'anion dérivé d'un acide de Brönsted (acide protique) organique ou minéral. Habituellement, l'anion Z₁ ⁻ est dérivé d'un acide présentant un pKa inférieur à 6. De préférence, Z₁ ⁻ dérive d'un acide de pKa inférieur à 4, mieux encore inférieur à 2. Les pKa dont il est question ici sont les pKa des acides tels que mesurés dans l'eau.

Des exemples d'acides sont les acides carboxyliques de formule : Gₒ-COOH, dans laquelle Gₒ représente alkyle, et par exemple (C₁-C₂₂)alkyle ; ou bien aryle, et par exemple (C₆-C₁₈)aryle éventuellement substitué par un ou plusieurs alkyle, de préférence un ou plusieurs (C₁-C₆)alkyle ; les acides sulfoniques de formule : Gₒ-SO₃H dans laquelle Gₒ est tel que défini ci-dessus ; et les acides phosphoniques de formule : Gₒ-PO₃H dans laquelle Gₒ est tel que défini ci-dessus ; d'autres acides sont HF, HCI, HBr, HI, H₂SO₄, H₃PO₄, HCIO₄ et HBF₄.

Des exemples préférés d'acides carboxyliques sont l'acide acétique, l'acide benzoïque, et l'acide stéarique. A titre d'acide sulfonique préféré, on citera l'acide benzène sulfonique et à titre d'acide phosphonique préféré, on mentionnera l'acide phénylphosphonique.

Selon l'invention, on préfère plus particulièrement les anions Z₁ - dérivés des acides HCl, Hl et HBF₄.

Ainsi, des anions Z₁ - particulièrement préférés, selon l'invention, sont les anions halogénure et le tétrafluoroborate.

Des complexes précurseurs (IV) appropriés sont notamment les complexes de formule :

Pt₂[ViMe₂Si-O-SiMe₂Vi]₃ (complexe de Karstedt)

dans laquelle Vi représente le radical vinyle ;
et plus généralement les complexes de formule :

M₂[R₅R₆C=CR₄-Y₁-X-Y₂-CR₃=CR₁R₂]₃

où M, R₅, R₆, R₄, R₃, R₁, R₂, Y₁, X et Y₂ sont tels que définis ci-dessus, tels que par exemple M₂[CF₅R₆=CR₄-SiR_{d}Rₑ-O-SiR_{d}Rₑ-CR₃=CR₁R₂]₃ étant entendu que M, R₁, R₂, R₃, R₄, R₅, R₆, R_{d} et Rₑ sont tels que définis ci-dessus.

S'agissant du solvant (V), il est choisi de telle sorte que la solubilité du sel (III) et de la base (VI) dans ledit solvant (V) soit d'au moins 0,1% poids/poids à 25 °C, respectivement. En fait, il est préférable conformément à l'invention, que le sel (III) et la base (VI) soient partiellement dissous dans le solvant (V).

Selon une disposition avantageuse de l'invention, on sélectionne le solvant (V) parmi les solvants aprotiques polaires dont la température d'ébullition à 1 atm est inférieure à 150 °C préférablement à 120 °C, de préférence dans le groupe comprenant :
- les éthers cycliques ou non et en particulier le TétraHydroFurane (THF), l'éther de diéthyle, l'éther de düsopropyle, , le dioxanne, le diméthoxyéthane ou l'éther diméthylique du diéthylèneglycol ;
- le diméthylformamide, le diméthylacétamide, l'hexaméthylphosphorylamide:[(CH₃)₂N]₃PO et l'hexaméthylphosphoramide [(CH₃)₂N]₃P....;
le THF étant particulièrement préféré.

Le solvant (V) doit non seulement fournir un environnement réactionnel propice à la formation des complexes carbène/métal, mais aussi être neutre et facilement éliminable.

Quant à la base (VI), elle est choisie en fonction de sa capacité à déprotoner le sel (III) au moins partiellement dissous dans le solvant (V).
Il s'agit de préférence d'une base forte sélectionnée dans le groupe comprenant : les hydrures de métal alcalin, les hydroxydes de métal alcalin, les carboxylates de métal alcalin, les alcoolates de métal alcalin et les amidures de métal alcalin,
et plus préférentiellement encore dans le groupe comprenant :
l'hydrure de sodium, le méthylate de sodium, le tert-butylate de potassium, le düsopropylamidure de lithium et leurs mélanges.

Suivant une caractéristique avantageuse du procédé selon l'invention, la concentration de la base (VI) dans le milieu réactionnel se définit comme suit [en moles/l de solvant (V)] :

| | |
|---|---|
| | 10⁻⁶ ≤ VI ≤ 10 |
| de préférence | 10⁻³ ≤ VI ≤ 1. |

Sur le plan quantitatif, il importe, conformément à l'invention, que la base (VI) ne soit pas dans un excès tel que cela entraîne une réaction parasite avec les constituants du milieu réactionnel autres que le sel III à déprotoner.
Ainsi, suivant une caractéristique remarquable de l'invention, on met en oeuvre le sel (III) et la base (VI) en quantités telles que le rapport R_{VI/III} de normalité VI /III soit défini comme suit:
- R_{VI/III} ≤ 10
- de préférence 1 ≤ R_{VI/III} ≤ 5
et plus préférentiellement encore 1 ≤ R_{VI/III} ≤ 3.

Ces consommables III, IV, V, VI sont soit disponibles dans le commerce, soit facilement préparés par l'homme du métier à partir de composés commerciaux.
Une méthode de synthèse des sels de formule (III) dans laquelle A = B = C est décrite dans US 5 077 414.
Ce procédé comprend la réaction d'un composé X α,-dicarbonylé de formule : 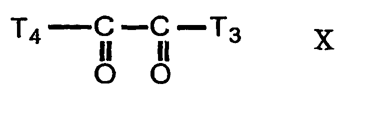 dans laquelle T₃ et T₄ sont tels que définis ci-dessus avec HCHO et deux amines de formules T₁-NH₂ et T₂-NH₂ en présence d'un acide approprié. La nature de l'anion Z₁ dans les sels de formule III dépend de l'acide utilisé à cette étape. Les acides utilisables sont par exemple ceux énumérés ci-dessus et dont dérive Z₁.

D'autres méthodes de préparation des sels de formule (III) sont proposées dans Chem. Eur. J. 1996, 2, n° 12, pages 1627-1636 et Angew. Chem. Int. Ed. Engl. 1997, 36, 2162-2187.

Selon un mode préféré de mise en oeuvre de l'invention, le procédé qu'elle concerne consiste essentiellement à :
a) mettre en solution le sel (III) et le composé (IV) dans le solvant (V),
b) incorporer en plusieurs fois la base (VI) à la solution de (III) et (IV) dans (V),
c) maintenir le milieu réactionnel ainsi constitué sous agitation, jusqu'à formation du composé (I),
d) récupérer le composé (I) formé, de préférence par évaporation,
e) éventuellement purification,
f) éventuellement séchage.

A propos des conditions opératoires, il est à noter que l'on préfère réaliser les étapes b) et c), à une température comprise entre ―78°C et 50°C, de préférence à 0°C et à pression atmosphérique.

La durée réactionnelle (étapes a),b),c)) peut varier par exemple de 2 heures à 48 heures. Elle est en moyenne de 5 heures. Cette durée décroît avec la solubilité du sel III dans le milieu. Si le sel précurseur est soluble dans le solvant V la durée de la réaction peut-être inférieure à 1 heure.

Dans un mode encore plus préféré de mise en oeuvre du procédé selon l'invention, on utilise comme produits de départ introduits dans l'enceinte réactionnelle :
- au moins un sel (III) de formule : 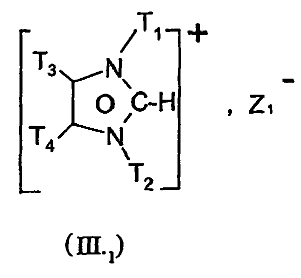 dans laquelle:
   - T₁, T₂ sont identiques et représentent (C₁-C₈)alkyle ou (C₃-C₈)cycloalkyle ;
   - T₃, T₄ sont identiques et représentent l'hydrogène ou bien représentent ensemble un phényle ;
   - Z₁ est un halogène, de préférence Cl, l, ou BF₄ ;
- au moins un complexe de Karstedt (IV) tel que défini dans le brevet US 3 775 452, de préférence un composé (IV) de formule : 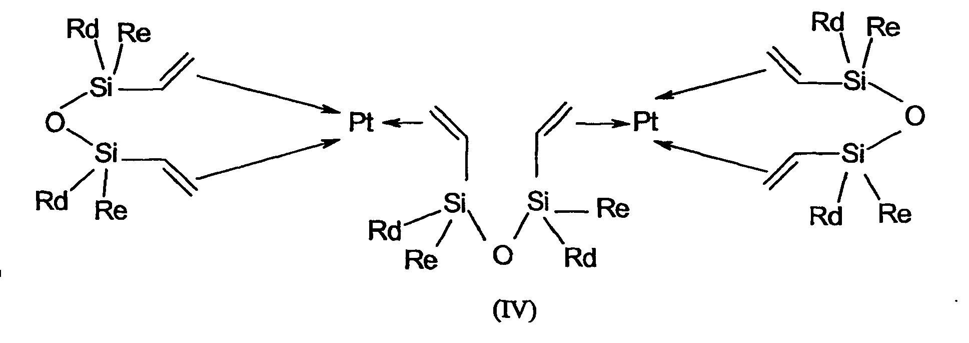 dans laquelle:
   Rd, Re sont identiques et représentent CH₃ ;
- un solvant (V) comprenant du THF,
- et au moins une base (VI) comprenant du *tert*-butylate de potassium (t-BuOK).

Selon un autre de ses aspects, l'invention concerne une composition catalytique comprenant, à titre de matière active, un ou plusieurs complexes métalliques préparés par mise en oeuvre du procédé selon l'invention.

Les catalyseurs ainsi préparés sont utilisables dans des réactions d'hydrosilylation. Ils permettent une catalyse homogène de la réaction.

L'invention a donc également pour objet un procédé d'hydrosilylation et en particulier d'hydrosilylation de composés éthyléniquement et/ou acétyléniquement insaturés, caractérisé en ce qu'il est mis en oeuvre en présence d'un catalyseur comprenant le complexe métallique obtenu par le procédé décrit ci-dessus.

Au sens de l'invention, le terme "composés éthyléniquement et/ou acétyléniquement insaturés" désigne notamment des composés organiques du type oléfine ou dérivé acétylénique, ainsi que des composés organominéraux, tels que des organosiliciques comme par exemple des dérivés vinylsiliciques et/ou acétylsiliciques.

Par réaction d'hydrosilylation, on entend selon l'invention la réaction d'un composé à double liaison éthylénique ou à triple liaison acétylénique (composé insaturé) avec un composé présentant au moins un motif ≡ Si―H de façon à former une liaison C-Si.

La réaction d'hydrosilylation peut être schématisée comme suit, dans le cas d'un composé à double liaison éthylénique : 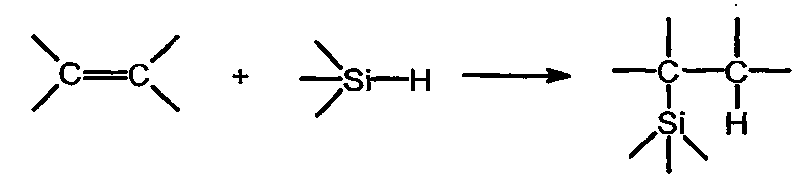 et, dans le cas d'un composé à triple liaison acétylénique :

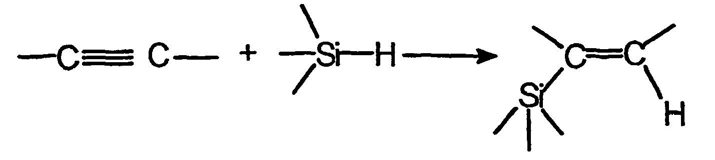

Les composés à double liaison éthylénique peuvent comprendre une ou plusieurs doubles liaisons et de 2 à 40 atomes de carbone. Ces composés peuvent être des hydrocarbures aliphatiques à chaîne hydrocarbonée linéaire ou ramifiée, ou bien des hydrocarbures cycliques, lesdits hydrocarbures cycliques ou aliphatiques portant éventuellement un ou plusieurs substituants de type (C₆-C₁₈)aryle éventuellement substitué par (C₁-C₆)alkyle. Les doubles liaisons sont généralement terminales.

Des exemples d'oléfines sont le 2-méthylbutène-1, le 1-hexène, le 1-heptène, le 1-octène, le 3-éthylhexène-1, le 1-décène, le 4,4-diméthylnonène-1, le vinylcyclohexène, le styrène et le 2-vinylnaphtalène, les PolyOrganoSiloxanes (POS) comprenant au moins un Si-vinyle par molécule.

Les composés à triple liaison acétylénique peuvent comprendre une ou plusieurs triple liaisons et de 2 à 40 atomes de carbone. Ces composés sont généralement des hydrocarbures aliphatiques à chaîne hydrocarbonée, linéaire ou ramifiée, éventuellement substituée par (C₃-C₁₀)cycloalkyle (lequel cycloalkyle peut porter éventuellement un ou plusieurs (C₁-C₆)alkyle) ou/et par (C₆-C₁₀)aryle (lequel aryle peut porter éventuellement un ou plusieurs (C₁-C₆)alkyle). De préférence, les composés à triple liaison acétylénique présentent une seule triple liaison. Les triples liaisons sont généralement terminales. Des exemples en sont : 2-propynyle, 1-propynyle et 2-pentèn-4-ynyle.

L'hydrosilylation de composés comprenant à la fois une ou plusieurs doubles liaisons éthyléniques et une ou plusieurs triples liaisons acétyléniques est également envisageable dans le cadre de l'invention.

Dans les conditions opératoires normalement prescrites dans la littérature pour les réactions d'hydrosilylation, on observe la formation de deux types de sous-produits de la réaction d'hydrosilylation, à savoir les produits d'isomérisation et les produits d'hydrogénation. Les produits d'isomérisation résultent de l'isomérisation des doubles liaisons. Les produits d'hydrogénation résultent de l'hydrogénation des doubles et triples liaisons.

De façon surprenante, lorsqu'on réalise l'hydrosilylation utilisant comme catalyseurs les complexes métalliques préparés par le procédé selon l'invention, la formation de ces sous-produits est fortement limitée. Plus particulièrement, on constate une forte réduction du taux d'isomères formés.

La réaction d'hydrosilylation peut être réalisée dans un solvant ou en l'absence de solvant. En variante, l'un des réactifs peut jouer le rôle de solvant : par exemple le composé à double liaison éthylénique ou à triple liaison acétylénique.

Des solvants appropriés sont des solvants miscibles avec le composé à motif Si-H.

Dans les conditions de la réaction d'hydrosilylation, le complexe catalyseur doit être solubilisé dans le milieu réactionnel.

Le composé à motif Si-H peut être un hydrure de silicium de formule (XIII): 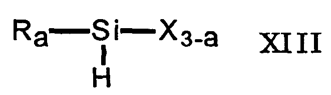 dans laquelle :
X est un radical comprenant un hétéroatome tel que O, Si, un atome d'halogène ou l'atome de carbone d'un groupe aliphatique ou aromatique ;
R est un atome d'hydrogène, un groupe alkyle, un groupe aryle, un groupe cycloalkyle, un groupe alcoxy, un groupe aryloxy ou un groupe cycloalcoxy ;
a est un nombre entier de 0 à 3.

Il doit être entendu que, selon l'invention, les groupes aliphatiques, aromatiques, alkyle, aryle, cycloalkyle, alcoxy, aryloxy, cycloalcoxy, peuvent être substitués ou non. La nature des substituants est définie de façon à ne pas donner lieu à des réactions secondaires lors de la réaction d'hydrosilylation.

Des exemples appropriés de silane sont HSi(OC₂H₅)₃ et HSi(C₂H₅)₃.

Le composé à motif Si-H peut être un polymère de type polyhydrogénosiloxane. D'autres polymères et copolymères appropriés sont les polyhydrogénosilanes comprenant un nombre important de motifs récurrents contenant des liaisons Si-H.

De préférence, les polymères utilisables ont des motifs récurrents de formule : 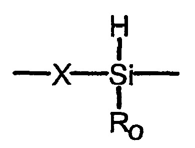 dans laquelle X est un radical comprenant un hétéroatome tel que O, Si ou l'atome de carbone d'un groupe aliphatique ou aromatique ; et Rₒ est un atome d'hydrogène ou un groupe organique choisi parmi alkyle, aryle, cycloalkyle, alcoxy, aryloxy ou cycloalcoxy. A titre d'exemples, on peut mentionner les polyhydrogénosiloxanes de formule : 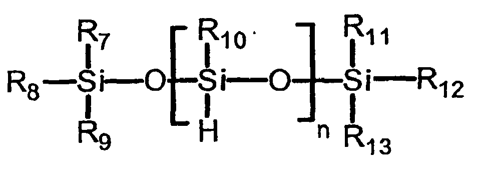 dans laquelle R₇ à R₁₃ sont indépendamment un atome d'hydrogène ou un groupe organique. De préférence, R₇, R₈, R₉, R₁₀, R₁₁, R₁₂ et R₁₃ sont choisis parmi un atome d'hydrogène, un groupe alkyle, aryle, cycloalkyle, alcoxy, aryloxy et cycloalcoxy ;
n est un entier au moins égal à 1 et de préférence au moins égal à 10 et, mieux, compris entre 10 et 100.

Des polymères appropriés sont les polyméthylhydrogénosiloxanes à extrémités -Si(CH₃)₃ et les polydiméthylsiloxanes à extrémités -Si(CH₃)₂H, les copolymères méthylhydrogénodiméthylsiloxanes à extrémités -Si(CH₃)₂H, les copolymères méthylhydrogénométhyloctylsiloxanes, et les polymères méthylhydrogénocycfosiloxanes

En général, les polymères utilisables dans la réaction ont une masse moléculaire moyenne de 300 ou plus et de préférence comprise entre 300 et 10000 (g/mol).

Des exemples d'hydrures de silicium sont décrits dans US-A-5 359 113.

Des exemples de solvants utilisables pour l'hydrosilylation sont notamment les hydrocarbures aliphatiques (tels que pentane, hexane, heptane, pentaméthylheptane ou les fractions de distillation du pétrole) ; les hydrocarbures aromatiques (tels que le benzène le toluène et les xylènes : ortho-xylène paraxylène et méta-xylène) ; les hydrocarbures aliphatiques ou aromatiques halogénés (tels que tétrachloroéthylène) ; ou les éthers (tels que le tétrahydrofuranne ou le dioxanne).

La réaction d'hydrosilylation peut être conduite à une température comprise entre 15°C et 300°C, par exemple entre 20 et 240°C, mieux encore entre 70 et 200°C, notamment entre 50 et 140°C, très préférablement entre 50 et 100°C.

La quantité relative de composé insaturé et de composé à motif Si-H peut être contrôlée de façon à assurer la réaction de toutes les insaturations avec des liaisons Si-H.

Il est préférable néanmoins d'opérer en présence d'un excès molaire d'insaturation.

Généralement, le rapport molaire des insaturations aux liaisons Si-H varie entre 1:100 et 10:1.

Selon l'invention la réaction d'hydrosilylation est réalisée en présence d'une quantité catalytique d'un ou plusieurs complexes préparés selon l'invention. Par quantité catalytique on entend moins d'un équivalent molaire de platine par rapport à la quantité d'insaturations présentes dans le milieu réactionnel.

De façon générale il suffit d'introduire dans le milieu réactionnel moins de 1000 ppm, de préférence moins de 100 ppm, mieux encore moins de 50 ppm de platine calculé par rapport à la masse totale du composé insaturé et du composé à motifs Si-H.

Selon un mode de réalisation préféré de l'invention on place, sous agitation, dans un réacteur, le composé insaturé, le catalyseur et le solvant. On porte l'ensemble à la température souhaitée et on introduit, sous agitation, le composé à motifs Si-H.

L'invention est illustrée à la lumière des exemples suivants.

### EXEMPLES

### GENERALITES

La synthèse à partir du complexe (IV) de Karstedt, est résumée dans le schéma ci dessous: 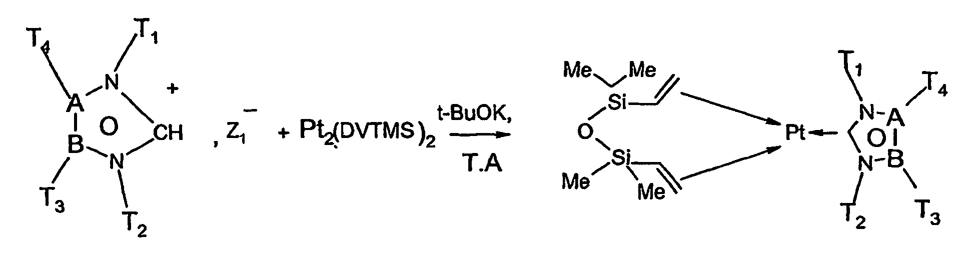 A, B, T₁, T₂, T₃, T₄, Z₁ étant tels que définis ci-dessus; DVTMS=DiVinylTétraMéthylSiloxane t-BuOK= tert-Butylate de potassium T.A=Température Ambiante

Le sel d'imidazolium est mis en présence du complexe de platine dans le THF. L'addition d'une base forte (tert-butylate de potassium) sur le mélange réactionnel permet de former le carbène, qui s'échange rapidement avec l'une des oléfines complexée au métal pour conduire au platine-carbène correspondant.
Les rendements et la sélectivité de la réaction sont bons. En outre ce procédé est avantageux du fait de sa simplicité de sa mise en oeuvre.

### EXEMPLE 1

Echelle : 1.8 mmoles
Verrerie : Ballon 200 ml
   Agitation magnétique
Charges:
   - 4,97 grammes d'une solution de Karstedt à 16.1 % en platine soit 4,1 mmoles de platine,
   - 1,31 g de tétrafluoroborate de N,N-di(cyclohexyl)imidazolium soit 4,1 mmoles (A=B=C; T₃=T₄=H, T₁=T₂= cyclohexyle), préparé selon la méthode décrite dans Chem. Eur. J. 1996, 2, n° 12, pages 1627-1636 et Angew. Chem. Int. Ed. Engl. 1997, 36, 2162-2187,
   - 926 mg de tert-butylate de potassium soit 8,2 mmoles (2 équiv.),
   - 100 mL de THF sec.

La solution de complexe de Karstedt et le sel d'imidazolium sont mis en solution dans le THF. Le tert-butylate de potassium est additionné en 1 heure à température 0°C et l'ensemble est maintenu cinq heures sous agitation. Le milieu réactionnel est concentré sous vide. Le résidu est repris par 30 ml de dichlorométhane. Cette phase organique est ensuite lavée par 3 fois 20 ml d'eau puis 2 fois 20 ml d'une solution saturée de NaHCO₃. La phase organique est récupérée puis concentrée sous vide. Le résidu solide est ensuite lavé par 3 fois 2 ml d'éthanol. On obtient ainsi 1,8 g d'un solide blanc analytiquement pur (rendement 71 %).

### EXEMPLE 2

Echelle : 1,0 mmoles
Verrerie: Ballon 100 ml
   Agitation magnétique
Charges :
   - 1,20 grammes d'une solution de Karstedt à 16.2% en platine soit 1 mmoles de platine,
   - 268 mg de tétrafluoroborate de N,N-di(t-butyl)imidazolium soit 1 mmoles (1,0 equiv.) (A=B=C; T₃=T₄=H, T₁=T₂= t-butyle),
   - 240 mg de tert-butylate de potassium soit 2 mmoles (2 équiv.),
   - 80 ml de THF sec.

La solution du complexe de Karstedt et le sel d'imidazolium sont dilués dans 80 ml de THF. Le tert-butylate de potassium est additionné à température ambiante et l'ensemble est maintenu dix heures sous agitation à l'abri de la lumière. Le milieu réactionnel est évaporé et le solide obtenu est purifié par une filtration rapide sur gel de silice (éluant CH₂Cl₂). Après évaporation du solvant, l'ensemble est rincé avec deux millilitres d'hexaméthyldisiloxane puis séché sous vide. On obtient 640 mg d'un solide blanc analytiquement pur (rendement 98%).

### EXEMPLE 3

Echelle : 0,5 mmoles
Verrerie : Ballon 50 ml
   Agitation magnétique
Charges:
   - 0.6 grammes d'une solution de Karstedt à 16.2% en platine soit 0.5 mmoles de platine,
   - 137 mg d'iodure de N,N-diméthylbenzimidazolium soit 0.5 mmoles (1,0 équiv.) (A,B,T₃ T₄ = benzyle;T₁=T₂= méthyle),
   - 112 mg de tert-butylate de potassium soit 1 mmoles (2 équiv.)
   - 20 ml de THF sec.

La solution du complexe de Karstedt et le sel de benzimidazolium sont placés dans le ballon puis dilués dans 20 ml de THF. Le tert-butylate de potassium est additionné à température ambiante et l'ensemble est maintenu trente six heures sous agitation à l'abri de la lumière. Le milieu réactionnel est dilué dans le dichlorométhane puis lavé à l'eau. Le solvant est évaporé, et l'huile obtenue est filtrée rapidement sur gel de silice (éluant CH₂Cl₂). Après évaporation du solvant, le solide obtenu est rincé avec 2 millilitres d'hexaméthyldisiloxane. On obtient 173 mg (rendement 66%) d'un solide blanc analytiquement pur.

## Revendications

1. Procédé de préparation de complexes métalliques de formule (I): 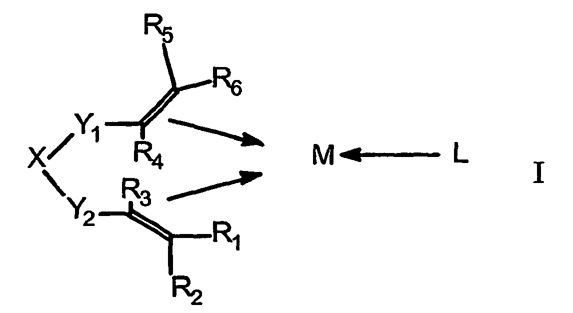 dans laquelle :
M représente un métal choisi parmi les métaux du groupe 8 du tableau périodique tel que publié dans Handbook of Chemistry and Physics, 65^{ème} édition, 1984-1985 ;
X représente O, NRₐ ou CR_{f}R_{g} ;
Y₁ et Y₂ représentent indépendamment l'un de l'autre CR_{b}R_{c} ou SiR_{d}Rₑ ;
R₁, R₂, R₃, R₄, R₅, R₆, Rₐ, R_{b} et R_{c} identiques ou différents, sont choisis parmi un atome d'hydrogène ; un groupe alkyle , acyle ; aryle éventuellement substitué par alkyle ; cycloalkyle éventuellement substitué par alkyle ; et arylalkyle dans lequel la partie aryle est éventuellement substituée par alkyle ;
R_{d} et Rₑ sont indépendamment choisis parmi alkyle ; aryle éventuellement substitué par alkyle ; cycloalkyle éventuellement substitué par alkyle ; et arylalkyle dans lequel la partie aryle est éventuellement substituée par alkyle ; ou bien lorsque Y₁ et Y₂ représentent indépendamment SiR_{d}Rₑ, deux groupes R_{d} liés à deux atomes de silicium distincts forment ensemble une chaîne de formule : 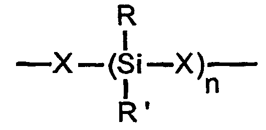
dans laquelle n est un entier de 1 à 3 ; X est tel que défini ci-dessus ; R et R', identiques ou différents, prennent l'une quelconque des significations données ci-dessus pour Rₑ, étant entendu que, lorsque n est 2 ou 3 un seul atome de silicium de ladite chaîne peut être substitué par un ou deux groupes alcényle ou alcynyle ; ou bien
lorsque Y₁ et Y₂ représentent indépendamment SiR_{d}Rₑ, deux groupes R_{d} liés à des atomes de silicium distincts forment ensemble une chaîne hydrocarbonée saturée, les deux groupes R_{d} ensemble avec lesdits atomes de silicium et X formant un cycle de 6 à 10 chaînons ; ou bien
lorsque Y₁ et Y₂ représentent indépendamment CR_{b}R_{c}, deux groupes R_{b} liés à des atomes de carbone distincts forment ensemble une chaîne hydrocarbonée saturée, les deux groupes R_{b} ensemble avec les atomes de carbone qui les portent et X forment un cycle de 6 à 10 chaînons ; et
R_{f} et Rg représentent indépendamment l'un de l'autre un atome d'hydrogène ; un groupe alkyle ; acyle ; aryle éventuellement substitué par alkyle ; cycloalkyle éventuellement substitué par alkyle ; arylaikyle dans lequel la partie aryle est éventuellement substituée par alkyle ; un atome d'halogène ; un groupe alcényte ; un groupe alcynyle ; ou un groupe SiG₁G₂G₃ ou G₁, G₂ et G₃ sont indépendamment l'un de l'autre alkyle ; alkoxy ; aryle éventuellement substitué par alkyle ou alkoxy ; ou arylalkyle dans lequel la partie aryle est éventuellement substituée par alkyle ou alkoxy ;
L représente un carbène de formule (II) : 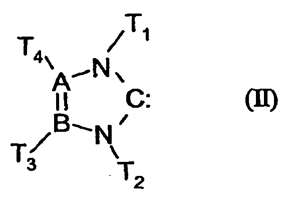
dans lesquelles:
- A et B représentent indépendamment C ou N, étant entendu que lorsque A représente N, alors T₄ ne représente rien et lorsque B représente N, alors T₃ ne représente rien ;
- T₃ et T₄ représentent indépendamment un atome d'hydrogène ; un groupe alkyle ; cycloalkyle éventuellement substitué par alkyle ou alkoxy ; aryle éventuellement substitué par alkyle ou alkoxy; alcényle ; alcynyle ; ou arylalkyle dans lequel la partie aryle est éventuellement substituée par alkyle ou alkoxy ;
ou bien
- T₃ et T₄ peuvent former ensemble et avec A et B quand ceux-ci représentent chacun un atome de carbone, un aryle ;
- T₁ et T₂ représentent indépendamment un groupe alkyle ; un groupe alkyle éventuelllement substitué par alkyle ; un groupe alkyle perfluoré ou éventuellement substitué par un groupe perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
- T₁ et T₂ représentent indépendamment un radical monovalent de formule (V) suivante :
―V₁―V₂ (V)
dans laquelle :
• V₁ est un radical divalent hydrocarboné, de préférence un alkylène linéaire ou ramifié en C₁-C₁₀, éventuellement substitué,
• V₂ est un radical monovalent choisi dans le groupe des substituants suivants :
◆ alcoxy, -OR^{ν} avec R^{ν} correspondant à hydrogène, alkyle, aryle
◆ amine, de préférence N(R^{ν})₂ avec R^{ν} correspondant à hydrogène, alkyle, aryle, ou bien encore,
- T₁ et T₂ représentent indépendamment un radical monovalent de formule (W) suivante :
―W₁―ω―W₂ (W)
dans laquelle :
• W₁ est un radical divalent hydrocarboné, de préférence un alkylène linéaire ou ramifié en C₁-C₁₀, éventuellement substitué,
• ω représente : .
―R^{α}C=CR^{α}―
avec R^{α} correspondant à H ou alkyle
ou
―C≡C―
• W₂ est un radical monovalent choisi dans le groupe des substituants suivants :
◆ R^{β} = alkyle, H ;
◆ Si-alkyle, Si-alcényle ou Si-alcynyle, de préférence Si-(alkyle)₃;
◆ alcool, de préférence ―C(R^{ε})₂OH avec R^{ε} = OH, H ou alkyle;
◆ cétone, de préférence 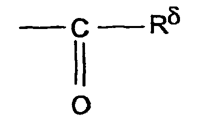 avec R^{δ} = alkyle ; alcényle, alcynyle ;
◆ carboxy, de préférence 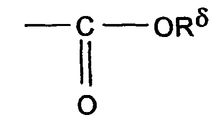 avec R^{δ} = alkyle ; alcényle, alcynyle ;
◆ amide, de préférence 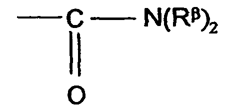 avec R^{β} = H, alkyle ; alcényle, alcynyle ;
◆ acyle, de préférence 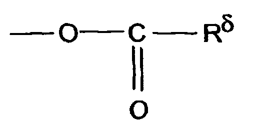 avec R^{δ} = alkyle ; alcényle, alcynyle ;
ou bien encore
- les substituants T₁, T₂, T₃ et T₄ peuvent former deux à deux, lorsqu'ils sont situés sur deux sommets adjacents dans la formule II, une chaîne hydrocarbonée saturée ou insaturée;
ce procédé étant **caractérisé en ce qu'**il consiste essentiellement à mettre en présence :
• au moins un sel de formule (III) : 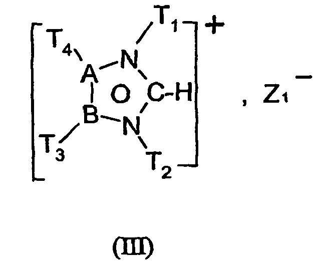 dans laquelle :
- A, B, T₁, T₂, T₃, T₄ sont tels que définis ci-dessus;
- Z₁ représente indépendamment un anion dérivé d'un acide de Brönsted (acide protique) de préférence choisi dans le groupe comprenant :
- les acides carboxyliques de formule Go-COOH dans laquelle Go représente un alkyle, et avantageusement un alkyle en C₁-C₂₂ ; un aryle, avantageusement un aryle en C₆-C₁₈ éventuellement substitué par un ou plusieurs alkyle en C₁-C₆ ;
- les acides sulfoniques de formule Go-SO₃H dans laquelle Go est tel que défini ci-dessus ;
- les acides phosphoriques de formule Go-PO₃H dans laquelle Go est tel que défini ci-dessus ;
- les acides minéraux suivants : HF, HCl, HBr, Hl, H₂SO₄, H₃PO₄, HClO₄ et HBF₄ pris à eux seuls ou en combinaison entre eux ;
- et leurs mélanges ;
• au moins un complexe précurseur (IV) sélectionné dans le groupe des complexes appropriés comportant les complexes de formule :
Pt₂[ViMe₂Si-O-SiMe₂Vi]₃ (complexe de Karstedt)
dans laquelle Vi représente le radical vinyle ; et plus généralement les complexes de formule :
M₂[R₅R₆C=CR₄-Y₁-X-Y₂-CR₃=CR₁R₂]₃
où M, R₅, R₆, R₄, R₃, R₁, R₂, Y₁, X et Y₂ sont tels que définis ci-dessus, tels que par exemple : M₂[CR₅R₆=CR₄-SiR_{d}Rₑ-O-SiR_{d}Rₑ-CR₃=CRiR₂]₃ étant entendu que M, R₁, R₂, R₃, R₄, R₅, R₆, R_{d} et Rₑ sont tels que définis ci-dessus ;
• au moins un solvant (V)
• et au moins une base (VI).

2. Procédé selon la revendication 1, **caractérisé en ce que** le composé de formule (I) est obtenu en une seule étape.

3. Procédé selon la revendication 1 ou 2, **caractérisé en ce que** l'on choisit le solvant (V), de telle sorte que la solubilité du sel (III) et de la base (VI) dans ledit solvant (V) soit d'au moins 0,1 % poids/poids à 25°C, respectivement.

4. Procédé selon l'une quelconque des revendications 1 à 3, **caractérisé en ce que** l'on choisit le solvant (V) parmi les solvants aprotiques polaires dont la température d'ébullition à 1 atm est inférieure à 150°C préférablement à 120°C, de préférence dans le groupe comprenant :
• les éthers cycliques ou non et en particulier le TétraHydroFuranne (THF), l'éther de diéthyle, l'éther de düsopropyle, , le dioxanne, le diméthoxyéthane ou l'éther diméthylique du diéthylèneglycol ;
• le diméthylformamide, le diméthylacétamide, l'hexaméthylphosphorylamide:[(CH₃)₂N]₃PO et l'hexaméthylphosphoramide [(CH₃)₂N]₃P ;
le THF étant particulièrement préféré.

5. Procédé selon l'une quelconque des revendications 1 à 4, **caractérisé en ce que** la (ou les) base(s) (VI) est (sont) choisie(s) parmi les bases fortes aptes à déprotoner le sel (III) de préférence dans le groupe comprenant :
les hydrures de métal alcalin, les hydroxydes de métal alcalin, les carboxylates de métal alcalin, les alcoolates de métal alcalin et les amidures de métal alcalin,
et plus préférentiellement encore dans le groupe comprenant :
l'hydrure de sodium, le méthylate de sodium, le tert-butylate de potassium, le diisopropylamidure de lithium et leurs mélanges.

6. Procédé selon l'une quelconque des revendications 1 à 5, **caractérisé en ce que** la concentration de la base *(VI)* dans le milieu réactionnel en M/I de solvant (V) est de préférence :
| | |
|---|---|
| | 10⁻⁶ ≤ VI ≤10 |
| et plus préférentiellement encore | 10⁻³ ≤ VI ≤ 1. |

7. Procédé selon l'une quelconque des revendications 1 à 6, **caractérisé en ce que** l'on met en oeuvre le sel (III) et la base (VI) en quantités telles que le rapport R_{VI/III} de normalité VI / III soit défini comme suit:
| | | |
|---|---|---|
| | R_{VI/III} | ≤ 10 |
| • de préférence | 1 ≤ R_{VI/III} | ≤ 5 |
| • et plus préférentiellement encore | 1≤R_{VI/III} | ≤ 3. |

8. Procédé selon l'une quelconque des revendications 1 à 7, **caractérisé en ce qu'**il consiste essentiellement à :
a) mettre en solution le sel (III) et le composé (IV) dans le solvant (V).
b) incorporer en plusieurs fois la base (VI) à la solution de (III) et (IV) dans (V),
c) maintenir le milieu réactionnel ainsi constitué sous agitation, jusqu'à formation du composé (I),
d) récupérer le composé (I) formé, de préférence par évaporation,
e) éventuellement purification,
f) éventuellement séchage.

9. Procédé selon l'une quelconque des revendications 1 à 8, **caractérisé en ce que** l'on réalise les étapes b) et c), à une température comprise entre -78°C et 50°C.

10. Procédé selon l'une quelconque des revendications 1 à 9, **caractérisé en ce que** l'on utilise :
• au moins un sel (III) de formule : 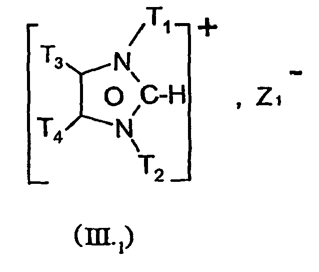 dans laquelle:
- T₁, T₂ sont identiques et représentent (C₁-C₈)alkyle ou (C₃-C₈)cycloalkyle ;
- T₃, T₄ sont identiques et représentent l'hydrogène ou bien représentent ensemble un phényle ;
- Z₁ est un halogène, de préférence Cl, I, ou BF₄ ;
• au moins un complexe de Karstedt (IV), de préférence un composé (IV) de formule : 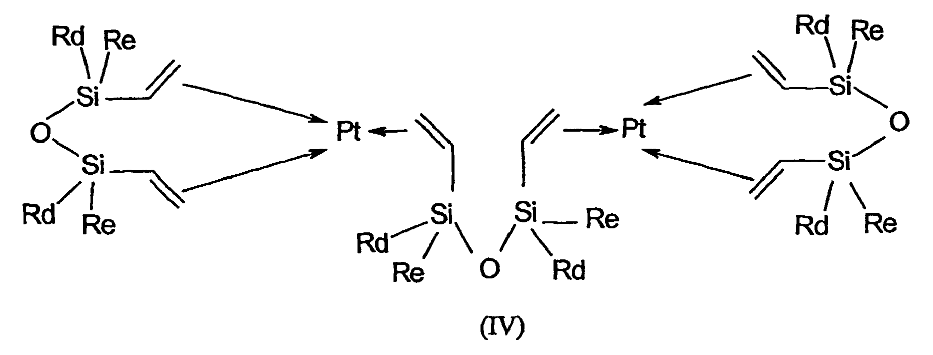 dans laquelle :
Rd, Re sont identiques et représentent CH₃ ;
• un solvant (V) comprenant du THF,
• et au moins une base (VI) comprenant du *tert-*butylate de potassium (t-BuOK).

11. Procédé d'hydrosilylation de composés éthyléniquement et/ou acétyléniquement insaturés **caractérisé en ce qu'**il est mis en oeuvre en présence d'un catalyseur comprenant le complexe métallique obtenu par le procédé selon l'une quelconque des revendications 1 à 10.

## Claims

1. Process for preparing metallic complexes of formula (I): 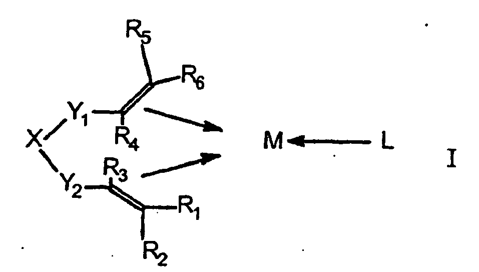 in which:
M represents a metal chosen from the metals of group 8 of the Periodic Table as published in the Handbook of Chemistry and Physics, 65th Edition, 1984-1985;
X represents O, NRₐ or CR_{f}R_{g};
Y₁ and Y₂ represent, independently of each other, CR_{b}R_{c} or SiR_{d}Rₑ;
R₁, R₂, R₃, R₄, R₅, R₆, Rₐ, R_{b} and R_{c}, which may be identical or different, are chosen from a hydrogen atom; an alkyl group; an acyl group; an aryl group optionally substituted with alkyl; a cycloalkyl group optionally substituted with alkyl; and an arylalkyl group in which the aryl portion is optionally substituted with alkyl;
R_{d} and Rₑ are independently chosen from alkyl; aryl optionally substituted with alkyl; cycloalkyl optionally substituted with alkyl; and arylalkyl in which the aryl portion is optionally substituted with alkyl; or alternatively
when Y₁ and Y₂ independently represent SiR_{d}Rₑ, two groups R_{d} linked to two separate silicon atoms together form a chain of formula: 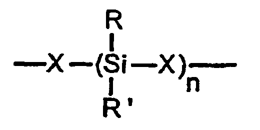
in which n is an integer from 1 to 3; X is as defined above; R and R', which may be identical or different, take any of the meanings given above for Rₑ, it being understood that, when n is 2 or 3, only one silicon atom of said chain may be substituted with one or two alkenyl or alkynyl groups; or alternatively
when Y₁ and Y₂ independently represent SiR_{d}Rₑ, two groups R_{d} linked to separate silicon atoms together form a saturated hydrocarbon-based chain, the two groups R_{d} together with said silicon atoms and X forming a 6- to 10-membered ring; or alternatively
when Y₁ and Y₂ independently represent CR_{b}R_{c}, two groups R_{b} linked to separate carbon atoms together form a saturated hydrocarbon-based chain, the two groups R_{b} together with the carbon atoms that bear them and X form a 6- to 10-membered ring; and
R_{f} and R_{g} represent, independently of each other, a hydrogen atom; an alkyl group; an acyl group; an aryl group optionally substituted with alkyl; a cycloalkyl group optionally substituted with alkyl; an arylalkyl group in which the aryl portion is optionally substituted with alkyl; a halogen atom; an alkenyl group; an alkynyl group; or a group SiG₁G₂G₃ in which G₁, G₂ and G₃ are, independently of each other, alkyl; alkoxy; aryl optionally substituted with alkyl or alkoxy; or arylalkyl in which the aryl portion is optionally substituted with alkyl or alkoxy;
L represents a carbene of formula (II): 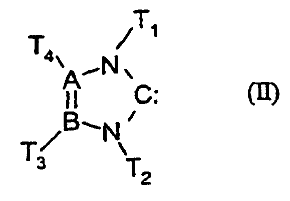
in which:
- A and B independently represent C or N, it being understood that when A represents N, then T₄ represents nothing, and when B represents N, then T₃ represents nothing;
- T₃ and T₄ independently represent a hydrogen atom; an alkyl group; a cycloalkyl group optionally substituted with alkyl or alkoxy; an aryl group optionally substituted with alkyl or alkoxy; an alkenyl group; an alkynyl group; or an arylalkyl group in which the aryl portion is optionally substituted with alkyl or alkoxy; or alternatively
- T₃ and T₄ may form, together with A and B when these each represent a carbon atom, an aryl;
- T₁ and T₂ independently represent an alkyl group; an alkyl group optionally substituted with alkyl; a perfluoroalkyl group or an alkyl group optionally substituted with a perfluoroalkyl group; a cycloalkyl group optionally substituted with alkyl or alkoxy; an aryl group optionally substituted with alkyl or alkoxy; an alkenyl group; an alkynyl group; or an arylalkyl group in which the aryl portion is optionally substituted with alkyl or alkoxy; or alternatively
- T₁ and T₂ independently represent a monovalent radical of formula (V) below:
―V₁―V₂ (V)
in which:
• V₁ is a divalent hydrocarbon-based radical, preferably an optionally substituted linear or branched C₁-C₁₀ alkylene,
• V₂ is a monovalent radical chosen from the following group of substituents:
◆ alkoxy, -OR^{ν} with R^{ν} corresponding to hydrogen, alkyl or aryl
◆ amine, preferably N(R^{ν})2 with R^{ν} corresponding to hydrogen, alkyl or aryl, or alternatively
- T₁ and T₂ independently represent a monovalent radical of formula (W) below:
―W₁―ω―W₂ (W)
in which:
• W₁ is a divalent hydrocarbon-based radical, preferably an optionally substituted linear or branched C₁-C₁₀ alkylene,
• ω represents:
―R^{α}C = CR^{α}―
with R^{α} corresponding to H or alkyl
or
―C≡C―
• W₂ is a monovalent radical chosen from the following group of substituents:
◆ R^{β} = alkyl, H;
◆ Si-alkyl, Si-alkenyl or Si-alkynyl, preferably Si- (alkyl)₃;
◆ alcohol, preferably ―C(R^{ε})₂OH with R^{ε} = OH, H or alkyl;
◆ ketone, preferably 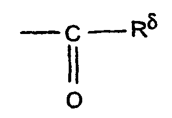 with R^{δ} = alkyl; alkenyl, alkynyl;
◆ carboxyl, preferably 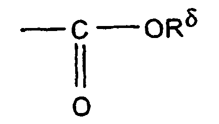 with R^{δ} = alkyl; alkenyl, alkynyl;
◆ amide, preferably 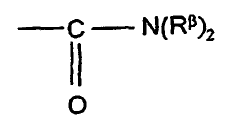 with R^{β} = H, alkyl; alkenyl, alkynyl;
◆ acyl, preferably 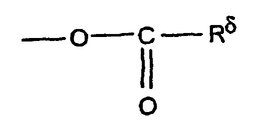 with R^{δ} = alkyl; alkenyl, alkynyl;
or alternatively
- the substituents T₁, T₂, T₃ and T₄ can form in pairs, when they are located on two adjacent ring members in formula II, a saturated or unsaturated hydrocarbon-based chain;
this process being **characterized in that** it consists essentially in placing in contact:
• at least one salt of formula (III): 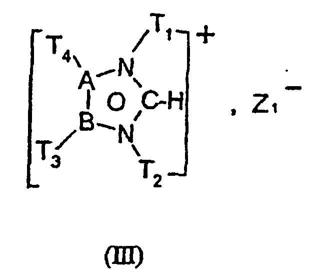 in which:
- A, B, T₁, T₂, T₃ and T₄ are as defined above;
- Z₁ independently represents an anion derived from a Brönsted acid (protic acid) preferably chosen from the group comprising:
- carboxylic acids of formula Go-COOH in which Go represents an alkyl, and advantageously a C₁-C₂₂ alkyl; an aryl, advantageously a C₆-C₁₈ aryl optionally substituted with one or more C₁-C₆ alkyls;
- sulphonic acids of formula Go-SO₃H in which Go is as defined above;
- phosphoric acids of formula Go-PO₃H in which Go is as defined above;
- the following mineral acids: HF, HC1, HBr, HI, H₂SO₄, H₃PO₄, HClO₄ and HBF₄ taken individually or in combination;
- and mixtures thereof;
• at least one precursor complex (IV) selected from the group of suitable complexes comprising the complexes of formula:
Pt₂[ViMe₂Si-O-SiMe₂Vi]₃ (Karstedt complex)
in which Vi represents a vinyl radical; and more generally the complexes of formula:
M₂ [R₅R₆C=CR₄-Y₁-X-Y₂-CR₃=CR₁R₂]₃
in which M, R₅, R₆, R₄, R₃, R₁, R₂, Y₁, X and Y₂ are as defined above, for instance: M₂ [CR₅R₆=CR₄-SiR_{d}Rₑ-O-SiR_{d}Rₑ-CR₃=CR₁R₂]₃, it being understood that M, R₁, R₂, R₃, R₄, R₅, R₆, R_{d} and Rₑ are as defined above;
• at least one solvent (V), and
• at least one base (VI).

2. Process according to Claim 1, **characterized in that** the compound of formula (I) is obtained in a single step.

3. Process according to Claim 1 or 2, **characterized in that** the solvent (V) is chosen such that the solubility of the salt (III) and of the base (VI) in said solvent (V) is at least 0.1% weight/weight at 25°C, respectively.

4. Process according to any one of Claims 1 to 3, **characterized in that** the solvent (V) is chosen from polar aprotic solvents with a boiling point at 1 atm of less than 150°C and preferably less than 120°C, preferably from the group comprising:
• cyclic or noncyclic ethers and in particular tetrahydrofuran (THF), diethyl ether, diisopropyl ether, dioxane, dimethoxyethane or diethylene glycol dimethyl ether;
• dimethylformamide, dimethylacetamide, hexamethylphosphorylamide: [(CH₃)₂N]₃PO and hexamethylphosphoramide [(CH₃)₂N]₃P;
• THF being particularly preferred.

5. Process according to any one of Claims 1 to 4, **characterized in that** the base(s) (VI) is (are) chosen from strong bases capable of deprotonating the salt (III), preferably from the group comprising:
alkali metal hydrides, alkali metal hydroxides, alkali metal carboxylates, alkali metal alkoxides and alkali metal amides,
and even more preferably from the group comprising:
sodium hydride, sodium methoxide, potassium tert-butoxide, lithium diisopropylamide, and mixtures thereof.

6. Process according to any one of Claims 1 to 5, **characterized in that** the concentration of the base (VI) in the reaction medium, in M/l of solvent (V), is preferably:
| | |
|---|---|
| | 10⁻⁶ ≤ VI ≤ 10 |
| and even more preferably | 10⁻³ ≤ VI ≤ 1. |

7. Process according to any one of Claims 1 to 6, **characterized in that** the salt (III) and the base (VI) are used in amounts such that the ratio R_{VI/III} of normality VI/III is defined as follows:
| | |
|---|---|
| | R_{VI/III} ≤ 10 |
| • preferably | 1 ≤ R_{VI/III} ≤ 5 |
| • and even more preferably | 1 ≤ R_{VI/III} ≤ 3. |

8. Process according to any one of Claims 1 to 7, **characterized in that** it consists essentially in:
a) dissolving the salt (III) and the compound (IV) in the solvent (V),
b) incorporating the base (VI) in several portions into the solution of (III) and (IV) in (V),
c) stirring the reaction medium thus prepared until compound (I) has formed,
d) recovering the formed compound (I), preferably by evaporation,
e) optionally, purifying,
f) optionally, drying.

9. Process according to any one of Claims 1 to 8, **characterized in that** steps b) and c) are performed at a temperature of between -78°C and 50°C.

10. Process according to any one of Claims 1 to 9, **characterized in that** the following are used:
• at least one salt (III) of formula: 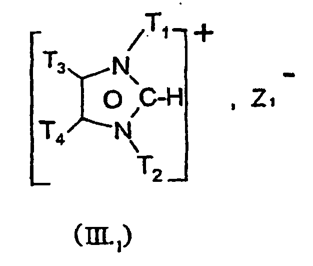 in which:
- T₁ and T₂ are identical and represent (C₁-C₈)alkyl or (C₃-C₈)cycloalkyl;
- T₃ and T₄ are identical and represent hydrogen or together represent a phenyl;
- Z₁ is a halogen, preferably Cl or I, or BF₄;
• at least one Karstedt complex (IV), preferably a compound (IV) of formula: 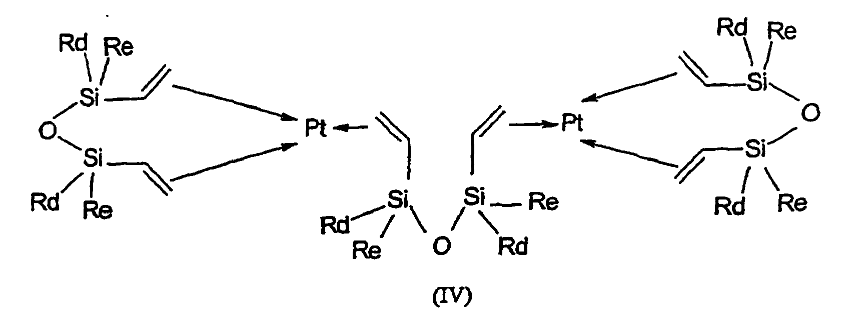 in which:
Rd and Re are identical and represent CH₃;
• a solvent (V) comprising THF, and
• at least one base (VI) comprising potassium *tert-*butoxide (KOt-Bu).

11. Process for the hydrosilylation of ethylenically and/or acetylenically unsaturated compounds, **characterized in that** it is performed in the presence of a catalyst comprising the metallic complex obtained by the process according to any one of Claims 1 to 10.

## Patentansprüche

1. Verfahren zur Herstellung von metallischen Komplexen der Formel (I) 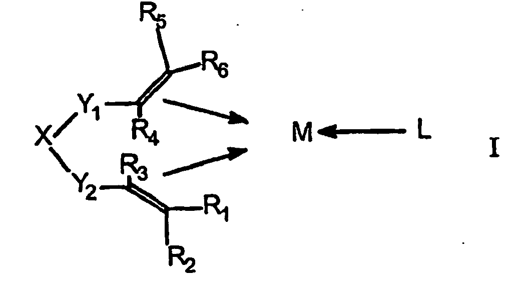 in der
M ein Metall darstellt, ausgewählt unter den Metallen der Gruppe 8 des Periodensystems wie es in Handbook of Chemistry and Physics, 65. Auflage, 1984-1985 veröffentlicht ist;
X O, NRₐ oder CR_{f}Rg darstellt;
Y₁ und Y₂ unabhängig voneinander CR_{b}R_{c} oder SiR_{d}Rₑ darstellen;
R₁, R₂, R₃, R₄, R₅, R₆, Rₐ, R_{b} und R_{c}, gleich oder verschieden, ausgewählt werden unter einem Wasserstoffatom; einer Gruppe Alkyl; Acyl; Aryl, gegebenenfalls substituiert durch Alkyl; Cycloalkyl, gegebenenfalls substituiert durch Alkyl; und Arylalkyl, worin der Teil Aryl gegebenenfalls durch Alkyl substituiert ist;
R_{d} und Rₑ unabhängig sind und ausgewählt werden unter Alkyl; Aryl, gegebenenfalls substituiert durch Alkyl; Cycloalkyl, gegebenenfalls substituiert durch Alkyl; und Arylalkyl, worin der Teil Aryl gegebenenfalls durch Alkyl substituiert ist; oder wenn Y₁ und Y₂ unabhängig SiR_{d}Rₑ darstellen, zwei Gruppen R_{d}, die an zwei unterschiedliche Siliciumatome gebunden sind, zusammen eine Kette der Formel 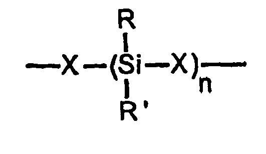 bilden,
in der n ein Ganzes von 1 bis 3 ist; X wie vorstehend definiert ist; R und R', gleich oder verschieden, irgendeine der vorstehend für Rₑ angegebenen Bedeutungen annehmen, mit der Maßgabe, daß in dem Fall, wo n 2 oder 3 ist, ein einziges Siliciumatom der genannten Kette durch eine oder zwei Gruppen Alkenyl oder Alkinyl substituiert sein kann; oder
wenn Y₁ und Y₂ unabhängig SiR_{d}Rₑ darstellen, zwei Gruppen R_{d}, die an unterschiedliche Siliciumatome gebunden sind, zusammen eine gesättigte Kohlenwasserstoff-Kette bilden, die zwei Gruppen R_{d} zusammen mit den genannten Siliciumatomen und X einen Ring mit 6 bis 10 Kettengliedern bilden; oder
wenn Y₁ und Y₂ unabhängig CR_{b}R_{c} darstellen, zwei Gruppen R_{b}, die an unterschiedliche Siliciumatome gebunden sind, zusammen eine gesättigte Kohlenwasserstoff-Kette bilden, die zwei Gruppen R_{b} zusammen mit den genannten Siliciumatomen, die sie tragen, und X einen Ring mit 6 bis 10 Kettengliedern bilden; und
R_{f} und Rg unabhängig voneinander ein Wasserstoffatom; eine Gruppe Alkyl; Acyl; Aryl, gegebenenfalls substituiert durch Alkyl; Cycloalkyl, gegebenenfalls substituiert durch Alkyl; Arylalkyl, worin der Teil Aryl gegebenenfalls durch Alkyl substituiert ist; ein Halogenatom; eine Gruppe Alkenyl; eine Gruppe Alkinyl; oder eine Gruppe SiG₁G₂G₃ darstellen, worin G₁, G₂ und G₃ unabhängig voneinander Alkyl; Alkoxy; Aryl, gegebenenfalls substituiert durch Alkyl oder Alkoxy; oder Arylalkyl sind, worin der Teil Aryl gegebenenfalls durch Alkyl oder Alkoxy substituiert ist;
L ein Carben der Formel (II) darstellt: 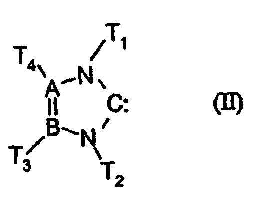 in der
- A und B unabhängig C oder N darstellen, mit der Maßgabe, daß in dem Fall, wo A N darstellt, dann T₄ nichts darstellt und wenn B N darstellt, dann T₃ nicht darstellt;
- T₃ und T₄ unabhängig ein Wasserstoffatom; eine Gruppe Alkyl; Cycloalkyl, gegebenenfalls substituiert durch Alkyl oder Alkoxy; Aryl, gegebenenfalls substituiert durch Alkyl oder Alkoxy; Alkenyl; Alkinyl; oder Arylalkyl darstellen, worin der Teil Aryl gegebenenfalls durch Alkyl oder Alkoxy substituiert ist; oder
- T₃ und T₄ zusammen und mit A und B, wenn diese jeweils ein Kohlenstoffatom darstellen, ein Aryl bilden können;
- T₁ und T₂ unabhängig eine Gruppe Alkyl; eine Gruppe Alkyl, gegebenenfalls substituiert durch Alkyl; eine Gruppe Alkyl, perfluoriert oder gegebenenfalls substituiert durch eine Gruppe Perfluoralkyl; Cycloalkyl, gegebenenfalls substituiert durch Alkyl oder Alkoxy; Aryl, gegebenenfalls substituiert durch Alkyl oder Alkoxy; Alkenyl; Alkinyl; oder Arylalkyl, worin der Teil Aryl gegebenenfalls durch Alkyl oder Alkoxy substituiert ist; oder
- T₁ und T₂ unabhängig einen monovalenten Rest der folgenden Formel (V) darstellen:
―V₁―V₂ (V)
in der
. V₁ ein divalenter Kohlenwasserstoff-Rest ist, vorzugsweise ein lineares oder verzweigtes Alkylen mit 1 bis 10 Kohlenstoffatomen, gegebenenfalls substituiert,
. V₂ ein monovalenter Rest ist, gewählt aus der Gruppe der folgenden Substituenten:
* Alkoxy, -OR^{v} mit R^{v} entsprechend Wasserstoff, Alkyl, Aryl,
* Amin, vorzugsweise N(R^{v})₂ mit R^{v} entsprechend Wasserstoff, Alkyl, Aryl, oder auch
- T₁ und T₂ unabhängig einen monovalenten Rest der folgenden Formel (W) darstellen:
―W₁―ω―W₂ (W)
in der
. W₁ ein divalenter Kohlenwasserstoff-Rest ist, vorzugsweise ein lineares oder verzweigtes Alkylen mit 1 bis 10 Kohlenstoffatomen, gegebenenfalls substituiert,
. ω darstellt
: ―R^{α}C=CR^{α}―
mit R^{α} entsprechend H oder Alkyl oder -C≡C-
. W₂ ein monovalenter Rest ist, gewählt aus der Gruppe der folgenden Substituenten:
* R^{β} = Alkyl, H;
* Si-Alkyl, Si-Alkenyl oder Si-Alkinyl, vorzugsweise Si-(Alkyl)₃;
* Alkohol, vorzugsweise -C(R^{ε})₂OH mit R^{ε} = OH, H oder Alkyl;
* Keton, vorzugsweise 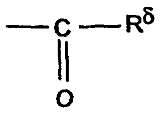 mit R^{δ} = Alkyl; Alkenyl, Alkinyl;
* Carboxy, vorzugsweise 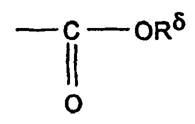 mit R^{δ} = Alkyl; Alkenyl, Alkinyl;
* Amid, vorzugsweise 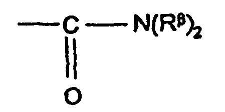 mit R^{β} = H, Alkyl; Alkenyl, Alkinyl;
* Acyl, vorzugsweise 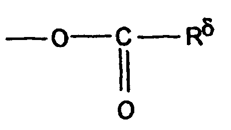 mit R^{δ} = Alkyl; Alkenyl, Alkinyl;
oder auch
- die Substituenten T₁, T₂, T₃ und T₄ paarweise, wenn sie sich an zwei angrenzenden Scheiteln in der Formel (II) befinden, eine gesättigte oder ungesättigte Kohlenwasserstoff-Kette bilden können;
wobei dieses Verfahren **dadurch gekennzeichnet ist, daß** es im wesentlichen darin besteht, zusammenzubringen:
. mindestens ein Salz der Formel (III): 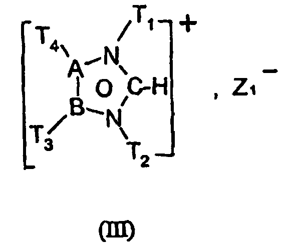 in der
- A, B, T₁ T₂, T₃, T₄ wie vorstehend definiert sind;
- Z₁ unabhängig ein Anion darstellt, abgeleitet von einer Brönsted-Säure (protische Säure), vorzugsweise gewählt aus der Gruppe, die umfaßt:
- die Carbonsäuren der Formel Go-COOH, in der Go ein Alkyl und vorteilhafterweise ein Alkyl mit 1 bis 22 Kohlenstoffatomen; ein Aryl, vorteilhafterweise ein Aryl mit 6 bis 18 Kohlenstoffatomen, gegebenenfalls substituiert durch ein oder mehrere Alkyl mit 1 bis 6 Kohlenstoffatomen, darstellt;
- die Sulfonsäuren der Formel Go-SO₃H, in der Go wie vorstehend definiert ist;
- die Phosphorsäuren der Formel Go-PO₃H, in der Go wie vorstehend definiert ist;
- die folgenden Mineralsäuren: HF, HCl, HBr, HI, H₂SO₄, H₃PO₄, HClO₄ und HBF₄, allein genommen oder in Kombination untereinander;
- und ihre Mischungen;
. mindestens einen Vorläufer-Komplex (IV), gewählt aus der Gruppe der geeigneten Komplexe, umfassen die Komplexe der Formel:
Pt₂[ViMe₂Si-O-SiMe₂Vi]₃ (Karstedt-Komplex)
worin Vi den Rest Vinyl darstellt; und ganz besonders die Komplexe der Formel:
M₂[R₅R₆C=CR₄-Y₁-X-Y₂-CR₃=CR₁R₂]₃
worin M, R₅, R₆, R₄, R₃, R₁, R₂, Y₁, X und Y₂ wie vorstehend definiert sind, wie beispielsweise M₂[R₅R₆C=CR₄-SiR_{d}Rₑ-O-SiR_{d}Rₑ-CR₃=CR₁R₂]₃, mit der Maßgabe, daß M, R₁, R₂, R₃, R₄, R₅, R₆, R_{d} und Rₑ wie vorstehend definiert sind,
. mindestens ein Lösungsmittel (V) und
. mindestens eine Base (VI).

2. Verfahren nach Anspruch 1, **dadurch gekennzeichnet, daß** die Verbindung der Formel (I) in einer einzigen Stufe erhalten wird.

3. Verfahren nach Anspruch 1 oder 2, **dadurch gekennzeichnet, daß** man das Lösungsmittel (V) in der Weise auswählt, daß die Löslichkeit des Salzes (III) und der Base (VI) in dem genannten Lösungsmittel (V) jeweils mindestens 0,1% Gewicht/Gewicht bei 25 °C beträgt.

4. Verfahren nach irgendeinem der Ansprüche 1 bis 3, **dadurch gekennzeichnet, daß** man das Lösungsmittel (V) unter den polaren aprotischen Lösungsmitteln auswählt, deren Siedetemperatur bei 1 atm unter 150 °C, vorzugsweise bei 120 °C liegt, vorzugsweise aus der Gruppe, die umfaßt:
· die cyclischen oder nicht cyclischen Ether und insbesondere Tetrahydrofuran (THF), Diethylether, Diisopropylether, Dioxan, Dimethoxyethan, oder den Dimethylether von Diethylenglycol;
· Dimethylformamid, Dimethylacetamid, Hexamethylphosphorylamid [(CH₃)₂N]₃PO und Hexamethylphosphoramid [(CH₃)₂N]₃P; wobei das Tetrahydrofuran bevorzugt ist.

5. Verfahren nach irgendeinem der Ansprüche 1 bis 4, **dadurch gekennzeichnet, daß** die Base(n) (VI) unter den starken Basen ausgewählt wird (werden), die fähig sind, das Salz (III) zu deprotonisieren, vorzugsweise aus der Gruppe, die umfaßt:
die Alkalimetall-Hydride, die Alkalimetall-Hydroxide, die Alkalimetall-Carboxylate, die Alkalimetall-Alkoholate und die Alkalimetall-Amide,
und ganz besonders aus der Gruppe, die umfaßt: Natriumhydrid, Natriummethylat, Kalium-tert.-Butylat, Lithium-Diisopropylamid und ihre Mischungen.

6. Verfahren nach irgendeinem der Ansprüche 1 bis 5, **dadurch gekennzeichnet, daß** die Konzentration der Base (VI) in dem Reaktionsmedium in M/I Lösungsmittel (V) vorzugsweise beträgt:
| | |
|---|---|
| | 10⁻⁶ ≤ VI ≤ 10 |
| und noch mehr bevorzugt | 10⁻³ ≤ VI ≤ 1. |

7. Verfahren nach irgendeinem der Ansprüche 1 bis 6, **dadurch gekennzeichnet, daß** man das Salz (III) und die Base (VI) in solchen Mengen einsetzt, daß das Verhältnis R_{VI/III} der Normalität VI/III wie folgt definiert ist:
| | |
|---|---|
| | R_{VI/III} ≤ 10 |
| vorzugsweise | 1 ≤ R_{VI/III} ≤ 5 |
| und noch mehr bevorzugt | 1 ≤ R_{VI/III} ≤ 3. |

8. Verfahren nach irgendeinem der Ansprüche 1 bis 7, **dadurch gekennzeichnet, daß** es im wesentlichen besteht in:
a) Lösen des Salzes (III) und der Verbindung (IV) in dem Lösungsmittel (V),
b) mehrmals Einbringen der Base (VI) in die Lösung von (III) und (IV) in (V),
c) Halten des auf diese Weise gebildeten Reaktionsmediums unter Rühren bis zur Bildung der Verbindung (I),
d) Gewinnen der gebildeten Verbindung (I), vorzugsweise durch Eindampfen,
e) gegebenenfalls Reinigung,
f) gegebenenfalls Trocknung.

9. Verfahren nach irgendeinem der Ansprüche 1 bis 8, **dadurch gekennzeichnet, daß** man die Stufen b) und c) bei einer Temperatur zwischen einschließlich -78 °C und 50 °C realisiert.

10. Verfahren nach irgendeinem der Ansprüche 1 bis 9, **dadurch gekennzeichnet, daß** man verwendet:
. mindestens ein Salz (III) der Formel: 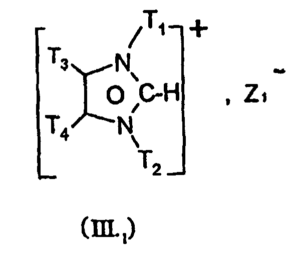 in der
- T₁, T₂ gleich sind und (C₁-C₈)-Alkyl oder (C₃-C₈)-Cycloalkyl darstellen;
- T₃, T₄ gleich sind und Wasserstoff oder auch zusammen ein Phenyl darstellen;
- Z₁ ein Halogen, vorzugsweise Cl, I oder BF₃ darstellt;
. mindestens einen Karstedt-Komplex (IV), vorzugsweise eine Verbindung (IV) der Formel: 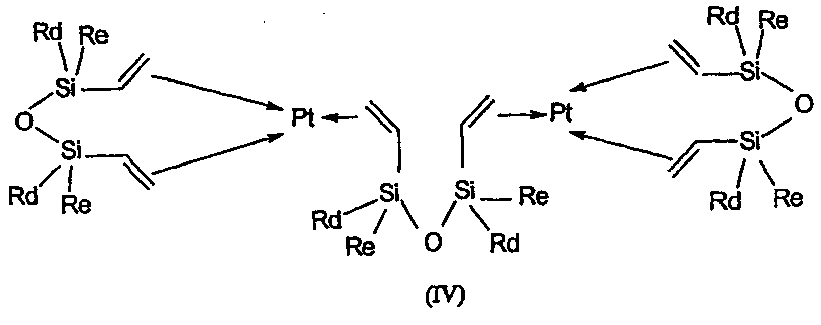 in der R_{d}, Rₑ gleich sind und CH₃ darstellen;
. ein Lösungsmittel (V), umfassend THF, und
. mindestens eine Base (VI), umfassend Kalium-tert.-Butylat (t-BuOK) .

11. Verfahren zur Hydrosilylierung von ethylenisch und/oder acetylenisch ungesättigten Verbindungen, **dadurch gekennzeichnet, daß** es in Anwesenheit eines Katalysators durchgeführt wird, der einen Metallkomplex umfaßt, wie er durch das Verfahren nach irgendeinem der Ansprüche 1 bis 10 erhalten wird.
